# EUROPEAN PATENT APPLICATION

(11) **EP 4 390 717 A1**
(43) Date of publication of application: **26.06.2024**
(21) Application number: 22888997.8
(22) Date of filing: 15.09.2022
(51) Int. Cl.: G06F 16/22

(54) **METADATA MANAGEMENT METHOD, RELATED APPARATUS, DEVICE, AND STORAGE MEDIUM**

(30) Priority: 04.11.2021 CN 202111302438
(71) Applicant: Tencent Technology (Shenzhen) Company Limited, Shenzhen, Guangdong, 518057 (CN)
(72) Inventor: WU, Yiwen, Shenzhen, Guangdong 518057 (CN); TANG, Tun, Shenzhen, Guangdong 518057 (CN); XUE, Zhaoming, Shenzhen, Guangdong 518057 (CN); GUO, Tianlian, Shenzhen, Guangdong 518057 (CN); ZHANG, Xiong, Shenzhen, Guangdong 518057 (CN); MA, Haoxiang, Shenzhen, Guangdong 518057 (CN); YU, Huali, Shenzhen, Guangdong 518057 (CN); TAN, Ganfeng, Shenzhen, Guangdong 518057 (CN); WANG, Dengshan, Shenzhen, Guangdong 518057 (CN)
(74) Representative: Sadler, Peter Frederick
(86) International application number: PCT/CN2022/118865
(87) International publication number: WO 2023/077970

(57) **Abstract**

A metadata management method of big data technology, includes: receiving an account authentication request transmitted by a client, the account authentication request carrying cloud account information; when the account authentication request is successfully verified, transmitting a metadata tenant set to the client, the metadata tenant set having a binding relation with the cloud account information; in response to a tenant selection request, transmitting a metadatabase set to the client, the metadata tenant set comprising the to-be-requested metadata tenant, and the metadatabase set having a mapping relation with the to-be-requested metadata tenant; and in response to a database query request, transmitting a metadata table set to the client, the to-be-requested metadatabase being comprised in the metadatabase set, and the metadatabase set having a mapping relation with the to-be-requested metadatabase.

## Description

This application claims priority to Chinese Patent Application No. 202111302438.1, filed with the Chinese Patent Office on November 04, 2021 and entitled "METADATA PROCESSING METHOD, RELATED APPARATUS AND DEVICE, AND STORAGE MEDIUM".

### FIELD OF THE TECHNOLOGY

This application relates to the field of cloud technologies, and in particular, to a metadata processing method, related apparatus and device, and a storage medium.

### BACKGROUND OF THE DISCLOSURE

A distributed data warehouse refers to use of a high-speed computer network to connect multiple physically dispersed data storage units and constitute a logically unified data warehouse. In recent years, with the rapid growth of data volume, the distributed data warehouse technology has also been rapidly developed. The distributed data warehouse distributes data to multiple data nodes connected through the network to obtain a larger storage capacity and a higher concurrent access amount.

Metadata management of the distributed data warehouse is very important. Typically, metadata can be persisted in a relational database. When calling the metadata, first the metadata needs to be called to obtain a library table structure and a data storage position. Then, the Structured Query Language (SQL) is executed to perform operations such as adding, deleting, modifying, and querying on the metadata.

However, the metadata management mode would affect the metadata resources between the tenants. For example, tenant A creates a metadatabase named "DB.01", and then a metadatabase named "DB.01" cannot be further created by tenant B. Tenant B may need to create a metadatabase with a proper name only through multiple attempts.

### SUMMARY

The embodiments of this application provide a metadata processing method, related apparatus and device, and a storage medium. It not only facilitates to expand boundary of metadata management of the cloud account, but also can realize isolation of metadata resources (for example, a metadatabase and a metadata table), preventing metadata resources between tenants from being affected to achieve a better metadata management effect.

In view of the above, a first aspect of this application provides a metadata processing method, performed by a server, and including:
receiving an account authentication request transmitted by a client, the account authentication request carrying cloud account information;
in a case that the cloud account information in the account authentication request is successfully verified, transmitting a metadata tenant set to the client, the metadata tenant set having a binding relation with the cloud account information;
in response to a tenant selection request transmitted by the client, transmitting a metadatabase set to the client, the tenant selection request carrying a tenant identifier indicating a target metadata tenant of the metadata tenant set, and the metadatabase set having a first mapping relation with the target metadata tenant; and
in response to a database query request transmitted by the client, transmitting a metadata table set to the client, the database query request carrying a metadatabase identifier indicating a target metadatabase of the metadatabase set, and the metadata table set having a second mapping relation with the target metadatabase.

Another aspect of this application provides a metadata processing apparatus, deployed on a server and including:
a receiving module, configured to receive an account authentication request transmitted by a client, the account authentication request carrying cloud account information;
a transmitting module, configured to, in a case that the cloud account information in the account authentication request is successfully verified, transmit a metadata tenant set to the client, the metadata tenant set having a binding relation with the cloud account information;
the transmitting module, further configured to, in response to a tenant selection request transmitted by the client, transmit a metadatabase set to the client, the tenant selection request carrying a tenant identifier indicating a target metadata tenant of the metadata tenant set, and the metadatabase set having a first mapping relation with the target metadata tenant; and
the transmitting module, further configured to, in response to a database query request transmitted by the client, transmit a metadata table set to the client, the database query request carrying a metadatabase identifier indicating a target metadatabase of the metadatabase set, and the metadata table set having a second mapping relation with the target metadatabase.

Another aspect of this application provides a computer device, including: a memory, a processor, and a bus system;
the memory being configured to store a program;
the processor being configured to execute the program in the memory, and the processor being configured to perform the method of the aspects according to an instruction in a program code; and
the bus system being configured to connect the memory and the processor, so that the memory is communicated with the processor.

Another aspect of this application provides a computer-readable storage medium. The computer-readable storage medium stores instructions, and when being run in a computer, the computer is enabled to execute the method of the aspects.

Another aspect of this application provides a computer program product, including a computer program stored in a computer-readable storage medium. The processor of the computer device reads the computer program from the computer-readable storage medium, and the processor executes the computer program, so that the computer device performs the method provided in the aspects.

According to the foregoing technical solutions, it can be learned that the embodiments of this application have the following advantages:
The embodiment of this application provides a metadata processing method: receiving an account authentication request transmitted by a client; in a case that the account authentication request is passed, transmitting a metadata tenant set to the client, the metadata tenant set having a binding relation with the cloud account information. On this basis, the client can trigger the tenant selection request; in response to the tenant selection request transmitted by the client, the server transmits a metadatabase set to the client; the client can trigger the database query request, and then, the server transmits the metadata table set to the client in response to the database query request transmitted by the client; the metadata table set has a mapping relation with the target metadatabase. In this way, the concept of the metadata tenant is designed on an upper layer of the metadatabase, which takes the metadata tenant as a minimum granularity of isolation among tenants and supports a mode that one cloud account is bound to multiple metadata tenants. Therefore, when the number of multi-tenants supported by a cloud account needs to be expanded, the metadata tenants bound to the cloud account can be increased, so that the number of multi-tenants supported by the cloud account can be expanded, that is, it facilitates that the metadata management boundary of the cloud account can be expanded. The same metadata tenant has an independent metadata management space. For different metadata tenants, it can realize isolation of metadata resources (for example, a metadatabase and a metadata table), preventing metadata resources between tenants from being affected to achieve a better metadata management effect.

### BRIEF DESCRIPTION OF THE DRAWINGS

FIG. 1 is a schematic diagram of a physical architecture of a metadata management system according to an embodiment of this application.
FIG. 2 is a schematic diagram of a logic architecture of a metadata management system according to an embodiment of this application.
FIG. 3 is a schematic diagram of an application scene of a data lake compute according to an embodiment of this application.
FIG. 4 is a schematic diagram of an application scene of a data lake formation according to an embodiment of this application.
FIG. 5 is a schematic flowchart of a metadata processing method according to an embodiment of this application.
FIG. 6 is a schematic diagram of a multi-tenant design model according to an embodiment of this application.
FIG. 7 is another schematic diagram of a multi-tenant design model according to an embodiment of this application.
FIG. 8 is a schematic diagram of metadata tenant association based on a service scene according to an embodiment of this application.
FIG. 9 is another schematic diagram of metadata tenant association based on a service scene according to an embodiment of this application.
FIG. 10 is another schematic diagram of metadata tenant association based on a service scene according to an embodiment of this application.
FIG. 11 is a schematic diagram of multi-compute engine compatibility according to an embodiment of this application.
FIG. 12 is a schematic flowchart of information authentication according to an embodiment of this application.
FIG. 13 is another schematic flowchart of information authentication according to an embodiment of this application.
FIG. 14 is a schematic diagram of information authentication implementing based on a security frame according to an embodiment of this application.
FIG. 15 is a schematic flowchart of metadata table creating according to an embodiment of this application.
FIG. 16 is a schematic flowchart of metadata table update according to an embodiment of this application.
FIG. 17 is a schematic flowchart of metadata table deletion according to an embodiment of this application.
FIG. 18 is a schematic flowchart of metadata table query according to an embodiment of this application.
FIG. 19 is a schematic diagram of a general metadata data model according to an embodiment of this application.
FIG. 20 is another schematic diagram of a general metadata data model according to an embodiment of this application.
FIG. 21 is a schematic diagram of comparison of response time consuming according to an embodiment of this application.
FIG. 22 is a schematic diagram of comparison of Transactions Per Second (TPS) according to an embodiment of this application.
FIG. 23 is a schematic diagram of a metadata processing apparatus according to an embodiment of this application.
FIG. 24 is a schematic structural diagram of a computer device according to an embodiment of this application.

### DESCRIPTION OF EMBODIMENTS

The embodiments of this application provide a metadata processing method, related apparatus and device, and a storage medium. It not only facilitates to expand boundary of metadata management of the cloud account, but also can realize isolation of metadata resources (for example, a metadatabase and a metadata table), preventing metadata resources between tenants from being affected to achieve a better metadata management effect.

With the wide use of big data and cloud computing technology, the importance of data directory and data governance is increasingly realized. Data governance requires a clear understanding of what data there is, and obviously the mode of manual combing can no longer keep up with the speed of data growth and change. As data operations mature and data pipelines become more complex, a traditional data directory often cannot meet these requirements. Therefore, it is of great significance to implement metadata management.

The metadata management process may involve big data technology, public cloud applications, etc., which are respectively described below. Big Data refers to a data set that cannot be captured, managed and processed by conventional software tools in a certain time range, and is a massive, high-growth and diversified information asset that needs new processing modes to have stronger decision-making power, insight and discovery ability and process optimization ability. With the advent of the cloud era, big data also has attracted more and more attentions. Big data needs special technology to effectively process a large amount of data that has been tolerated for a long time. Technologies suitable for big data include a large-scale parallel processing database, data mining, a distributed file system, a distributed database, a cloud computing platform, an Internet, and an extensible storage system.

Public Cloud normally refers to cloud provided by third-party providers for users to use. Public cloud can be used through the Internet for free or at a low cost. The core attribute of public cloud is to share resource services. There are many instances of this cloud, and services are available throughout today's open public network.

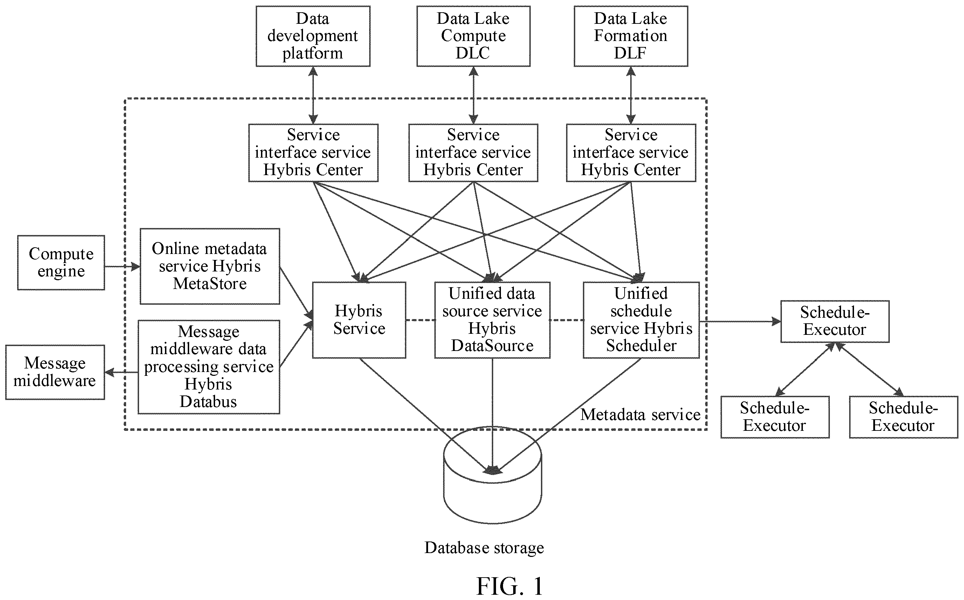

In order to achieve better results of metadata management, this application provides a metadata processing method, which is applied to the metadata management system. To facilitate understanding, the physical architecture of the metadata management system is introduced below in combination with FIG. 1. FIG. 1 is a schematic diagram of a physical architecture of a metadata management system according to an embodiment of this application. As shown in the drawing, a metadata service is a micro-service architecture design, which makes the service independent and internally closed according to function modules. The call before the service is realized through Remote Procedure Call (RPC). The dotted line box shown in FIG. 1 constitutes a metadata micro-service system, which mainly includes three parts, namely, a basic service, a component service and a business service. The basic service includes a core basic service (Hybris Service), a unified data source service (Hybris DataSource), and a unified scheduling service (Hybris Scheduler). The basic service is responsible for the basic function and basic module maintenance of the metadata management, and can realize the addition, deletion, modification, and query of the metadata, data source management, metadata discovery scheduling task management, etc. The component service includes an online metadata service (Hybris MetaStore) and a message middleware data processing service (Hybris Databus). The component service provides a general non-service processing capability for an external component, which can realize an online metadata management RPC service, a metadata message processing service, etc. The Business service includes a service interface service (Hybris Center). The business service is related to a specific product service. A Hyper Text Transfer Protocol (HTTP) interface can be provided for different service products for metadata management, for example, a data development platform, data lake compute, and data lake formation.

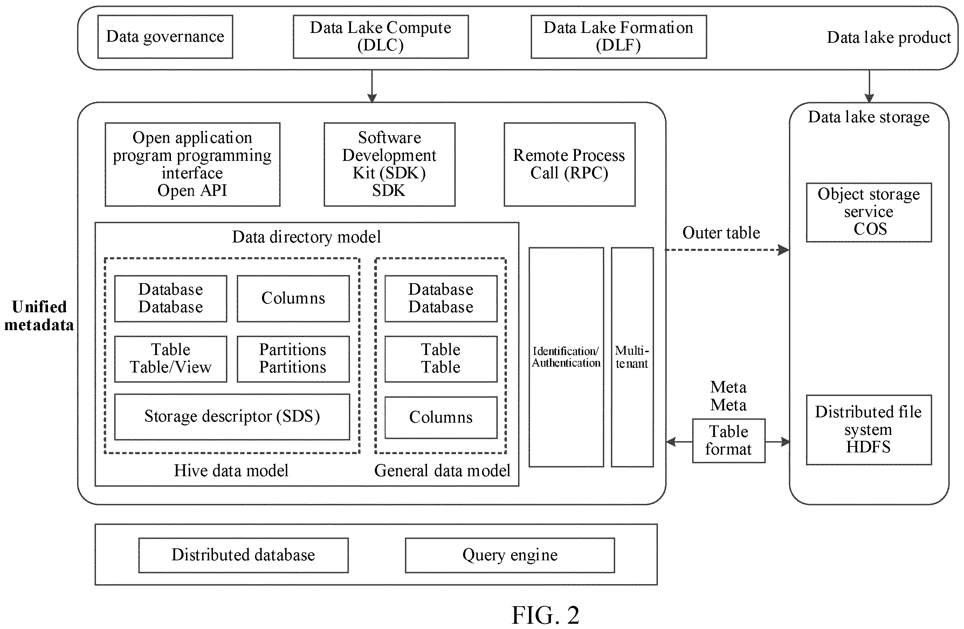

To facilitate understanding, an overall architecture of the multi-tenant metadata online data directory management is introduced by combining with FIG. 2. FIG. 2 is a schematic diagram of a logic architecture of a metadata management system according to an embodiment of this application. As shown in the drawing, the core logic of the unified metadata online management is to define the data directory model. Two types of data model definitions are shown in the drawing. One is a Hive data model, to store Hive type metadata and provide a metadata directory management core function compatible with Hive Metastore, such as a Database (DB), Table, Columns, and Partitions. The other type is a general data model for storing a broader range of non-Hive metadata and providing an general metadata directory management function for other data sources (i.e., other relation type database management systems). On the data directory model, multi-tenant and authentication (or right authentication) management is carried out to achieve secure and reliable online data directory management of multi-tenant metadata in the public cloud. Moreover, external components can access and manage metadata through a provided and self-developed Software Development Kit (SDK), general RPC interface, and HTTP interface.

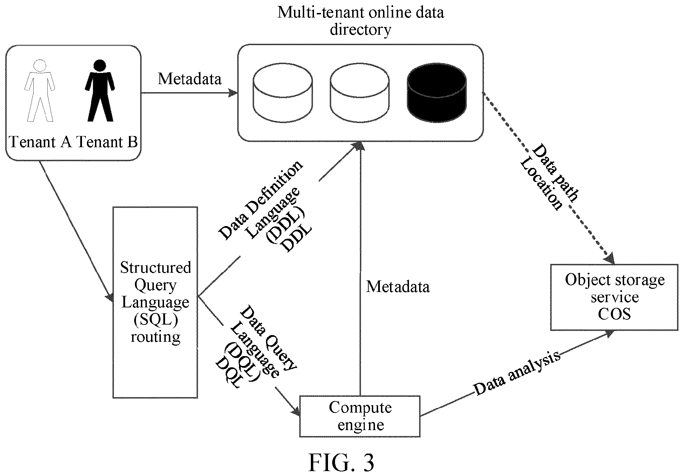

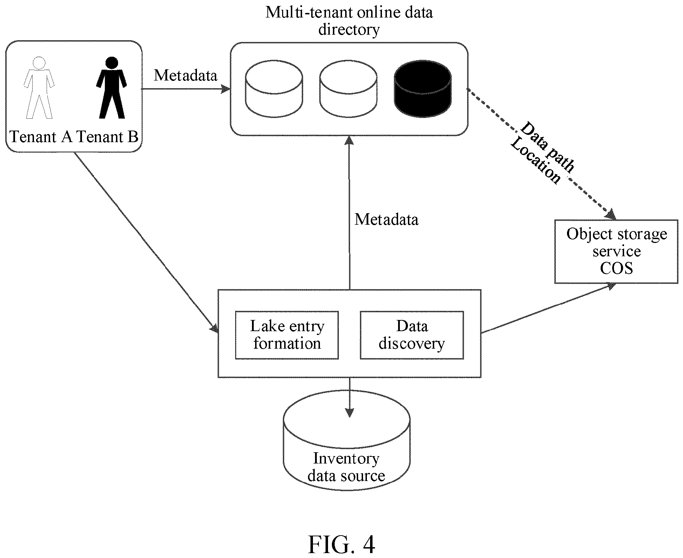

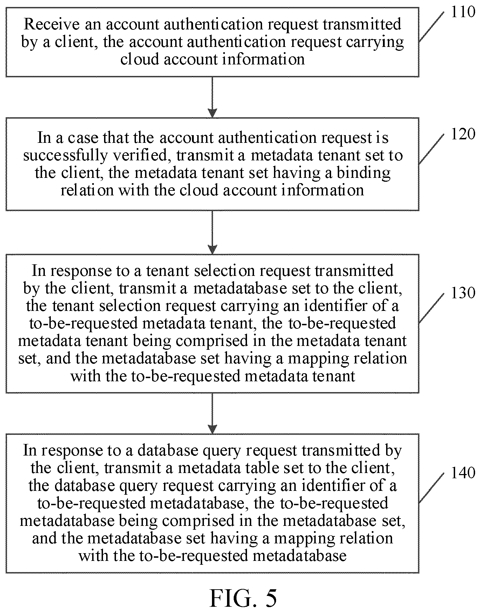

To facilitate understanding, professional terms involved in this application are introduced in the following.
(1) Hive Metastore: It is a built-in online metadata management service provided by the Hive system, and is mainly used for managing and storing metadata of databases, tables, columns, partitions, and User-Defined Function (UDF) defined in Hive.
(2) Metadata: It is an abstraction of data, and is data that describes data, such as: describing attribute information or organizational relationship of the data. In a relational database, table structure information (including table name, column name list, etc.) is description information of specific table data organizational relationship, and the table structure information is the metadata of the table data.
(3) Data directory: It is an organized inventory of enterprise data assets and provides a central summary of metadata for easy understanding, analysis, and governance of the data. This application mainly focuses on the discussion of the data directory of structured data, such as metadata such as bases, tables, columns, and partitions under the relational database system.
(4) Data directory management: It is a management service provided based on the data directory, and includes functions of adding, deleting, correcting, and querying the data directory (adding, deleting, correcting, updating, and querying), and functions of adding classification labels and data maps.
(5) Online data directory management: Data directory management can be divided into online management and offline management. Online management needs to ensure the immediacy, atomicity, and consistency of management operations. After the execution is completed, the user can quickly obtain results of the management operations. Moreover, offline management is mainly based on non-real-time offline computing to realize data asset mining and analysis, such as data trend partition and data quality management. This application can implement multi-tenant online data directory management. Common scenes include adding, deleting, modifying, and querying management operations for databases, tables, columns, partitions, etc.
(6) Multi-tenant technology: It is also known as multiple leasing technology, is a software architecture technology, and discusses how to share same program software in a multi-tenant (such as user group and resource group) environment. Through a single software architecture, services can be provided for multiple different tenants, and resources associated with and used by each tenant (provided by a software service) are isolated from each other and do not interfere with each other. The multi-tenant technology is a basic capability provided by a cloud service to ensure resource isolation of cloud customers. This application design has two multi-tenant technical dimensions, respectively metadata tenant and service tenant, to realize the isolation management of the general metadata resources in a public cloud scene.
(7) Metadata tenant: It is one of the tenant dimensions defined in this application. In data directory management, the division of the metadata is the minimum granularity of the metadata multi-tenant isolation. That is, one metadata tenant is shared by multiple different upper-layer tenants (such as the user groups and resource groups). In this application, a metadata tenant can be likened to a Hive Metastore system or can be likened to a database management system. Under one metadata tenant, creating multiple databases with different names can be supported.
(8) Service tenant: It is one of the tenant dimensions defined in this application. In data directory management, tenant resources are isolated based on the general service division for the division of the service. The service tenants are abstractions of specific service scenes. Through the design of the service tenants, this application can be generally adapted to personalized specific service scenes. For example, a service tenant of a data development platform represents a work space, and a service tenant of data lake compute represents a data source. Based on service tenants, a set of a data directory management system can be used for supporting different product requirements.
(9) Tenant dimension mapping: The two tenant dimensions defined in this application (i.e., the metadata tenants and service tenants) have no direct and definite association. However, the mapping relationship between the metadata tenants and service tenants can be defined using the tenant dimension mapping. The mapping relationship is related to specific service logic requirements, that is, specific mapping is implemented based on the service scenes. For example, in a data development platform, a service tenant represents a work space, and a work space can correspond to multiple metadata tenants. Therefore, service tenants and metadata tenants are in one-to-many mapping relationship. A service tenant in data lake compute represents a data source, and a data source corresponds to a metadata tenant. Therefore, service tenants and metadata tenants are in one-to-one mapping relationship.
(10) Data Lake Compute (DLC): It is used for providing quick and efficient data lake analysis and computing services. The multi-tenant online data directory system supports different call access inlets and scenes. To facilitate understanding, FIG. 3 is a schematic diagram of an application scene of a data lake compute according to an embodiment of this application. As shown in the drawing, the Structured Query Language (SQL) route forwards SQL routes and identifies SQL introduced by the user (such as tenants A and B). If SQL is of type Data Definition Language (DDL), the route is forwarded to the online data processing directory for processing, and if SQL is the type Data Query Language (DQL), the route is forwarded to the computing engine. Data directory management is supported by means of SQL sentences. DLC further supports the general big data computing engine, etc. to conduct the data directory management based on the PRC interface.
(11) Data Lake Formation (DLF): It is used for providing rapid formation of the data lake and the metadata management service on the lake to help the user rapidly and efficiently form the enterprise data lake technology architecture. The main responsibility of a multi-tenant online data directory is to interconnect with data discovery and lake entry construction tasks and provide metadata operation and management capabilities. To facilitate understanding, with reference to FIG. 4, taking tenant A and tenant B as an example, the data discovery can support multiple types of inventory data sources and metadata discovery and collection of Cloud Object Storage (COS) data files to obtain metadata structure information (for example, base definition structure and table definition structure), and final persistent maintenance to the multi-tenant data directory management system (i.e., the multi-tenant online data directory) is conducted. The lake entry formation may support real-time and offline data synchronization modes. Data is migrated and integrated from the original data source to the COS object storage system. During the migration process, the lake entry formation task would synchronize metadata information to the data directory management system, facilitating subsequent calculation and analysis of the migrated COS data.
   processing methodReferring to FIG. 5, the metadata processing method in an embodiment of this application includes:
   110. Receive an account authentication request transmitted by a client, the account authentication request carrying cloud account information.

In one or more embodiments, the metadata processing apparatus receives the account authentication request transmitted by the client. The account authentication request carries the cloud account information. The cloud account may be an account registered by an enterprise, and the cloud account information may include the enterprise account, password, etc. The cloud account can also be an account registered by an individual. The cloud account information can include a personal account (or mobile phone, email address, etc.) and password.

It should be noted that, the metadata processing apparatus can be deployed on one or multiple servers. It supports not only physical servers (for example, a server cluster or distributed system consisting of multiple physical servers) but also containerized deployment.

It should be noted that, the client can be run on the terminal device in the form of a browser or can also be run on the terminal device in the form of an independent application (APP). The specific presentation form of the client is not limited herein. The terminal device may be smart phones, tablets, laptops, palmtops, PCS, smart TVs, smart watches, car devices, wearable devices, etc., but is not limited thereto.

120. In a case that the cloud account information in the account authentication request is successfully verified, transmit a metadata tenant set to the client, the metadata tenant set having a binding relation with the cloud account information.

In one or more embodiments, the metadata processing apparatus verifies the cloud account information carried in the account authentication request. After the verification is successful, the metadata tenant set can be fed back to the client. Each cloud account is bound to a respective metadata tenant set, and the metadata tenant set includes at least one optional metadata tenant.

The metadata tenant set can be presented on the client in a form of a list. To facilitate understanding, Table 1 is a diagram of the relationship between the cloud account information and the metadata tenant set.

**Table 1**

| Could account information | Metadata tenant set |
|---|---|
| COM123 | Metadata tenant A |
| | Metadata tenant B |
| | Metadata tenant C |
| COM888 | Metadata tenant X |
| | Metadata tenant Y |

It should be noted that, the correspondence shown in table 1 is merely an example, and should not be understood as the limitation to this application.

130. In response to a tenant selection request transmitted by the client, transmit a metadatabase set to the client, the tenant selection request carrying a tenant identifier indicating a target metadata tenant of the metadata tenant set, and the metadatabase set having a mapping relation with the target metadata tenant.

In one or more embodiments, the user selects a metadata tenant from the metadata tenant set and triggers a tenant selection request for this metadata tenant. The tenant selection request carries the identifier of the target metadata tenant, and the target metadata tenant belongs to the metadata tenant set. The metadata processing apparatus feeds back to the client the metadatabase set based on a tenant selection request, where each metadata tenant is associated with a respective metadatabase set and the metadatabase set includes at least one metadatabase.

The metadatabase set can be presented on the client in the form of a list. Combined with Table 1, it is assumed that the user selects "metadata tenant A" from the metadata tenant set as the target metadata tenant. On this basis, Table 2 is a diagram of the relationship between the target metadata tenant and the metadatabase set.

**Table 2**

| Metadata tenant | Metadatabase set |
|---|---|
| Metadata tenant A | Metadatabase A |
| | Metadatabase B |
| | Metadatabase C |
| | Metadatabase D |

It should be noted that, the correspondence shown in table 2 is merely an example, and should not be understood as the limitation to this application.

140. In response to a database query request transmitted by the client, transmit a metadata table set to the client, the database query request carrying a metadatabase identifier indicating a target metadatabase of the metadatabase set, and the metadatabase set having a mapping relation with the target metadatabase.

In one or more embodiments, the user selects a metadatabase from the metadatabase set and triggers a database query request for this metadatabase. The database query request carries the identifier of the target metadatabase, and the target metadatabase belongs to the metadatabase set. The metadata processing apparatus feeds back to the client the metadata table set based on a database query request, where each metadatabase is associated with a respective metadata table set and the metadata table set includes at least one metadata table.

The metadata table set can be presented on the client in the form of a list. Combined with Table 3, it is assumed that the user selects "metadatabase A" from the metadatabase set as the target metadatabase. On this basis, Table 3 is a diagram of the relationship between the target metadatabase and the metadata table set.

**Table 3**

| Metadatabase | Metadata table set |
|---|---|
| Metadatabase A | Metadata table A |
| | Metadata table B |
| | Metadata table C |
| | Metadata table D |

It should be noted that, the correspondence shown in table 3 is merely an example, and should not be understood as the limitation to this application.

The embodiments of this application provide a metadata processing method. In this way, the concept of the metadata tenant is designed on an upper layer of the metadatabase, which takes the metadata tenant as a minimum granularity of isolation among tenants and supports a mode that one cloud account is bound to multiple metadata tenants. Therefore, when the number of multi-tenants supported by a cloud account needs to be expanded, the metadata tenants bound to the cloud account can be increased, so that the number of multi-tenants supported by the cloud account can be expanded, that is, it facilitates that the metadata management boundary of the cloud account can be expanded. The same metadata tenant has an independent metadata management space. For different metadata tenants, it can realize isolation of metadata resources (for example, a metadatabase and a metadata table), preventing metadata resources between tenants from being affected to achieve a better metadata management effect.

Based on the embodiment corresponding to FIG. 5, in all embodiments of the present disclosure, after transmitting the metadata table set to the client in response to the database query request transmitted by the client, the method may preferably further include:
in response to a data table query request transmitted by the client, transmitting a target metadata table to the client, the data table query request carrying a table identifier indicating the target metadata table comprised in the metadata table set.

In one or more embodiments, a metadata table query mode based on metadata tenant is introduced. As can be known from the embodiments above, the user selects a metadata table from the metadata table set and triggers a data table query request for this metadata table. The data table query request carries the identifier of the target metadata table, and the target metadata table belongs to the metadata table set. Based on a data table query request, the target metadata is fed back to the client.

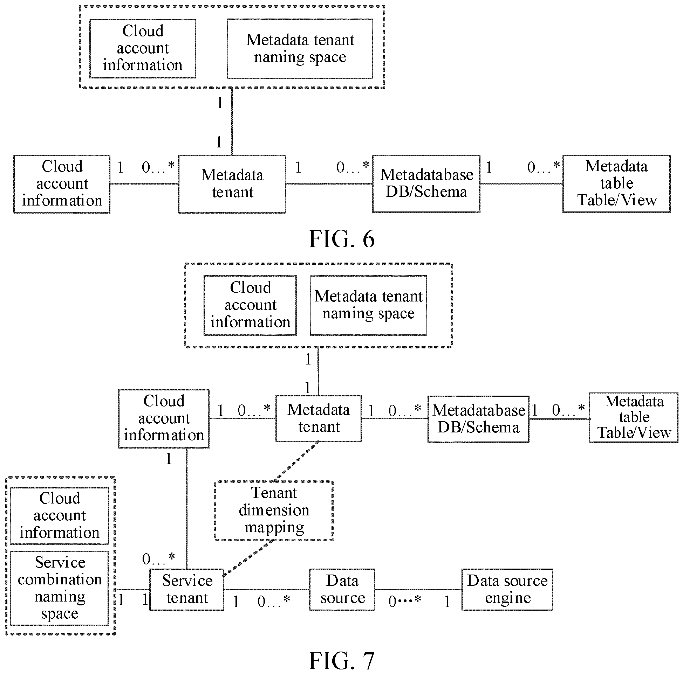

To facilitate understanding, FIG. 6 is a schematic diagram of a multi-tenant design model according to an embodiment of this application. As shown in the drawing, the cloud account information (for example, the cloud account information applied by Company A) is in a one-to-many mapping relationship with the metadata tenant (i.e., 1-0... *). Multiple metadata tenants can be created under cloud account information. For example, the one-to-many mapping relationship can be likened as that Company A can maintain multiple Hive Metastores under its cloud account information. Moreover, these metadata tenants are private and isolated from the metadata of other metadata tenants. The one-to-many mapping relationship can greatly expand the boundary of single could account information to the metadata management. To facilitate the management and recognition of the metadata tenant, the user can customize a naming space (i.e., the name identifier) of the metadata tenant. One piece of cloud account information and a naming space can uniquely determine a metadata tenant. Besides, the metadata tenant type can be customized and different metadata types can be supported, such as Hive and MySQL.

The metadata tenant and the metadatabases are in a one-to-many mapping relationship (i.e., 1:0... *). On this basis, multiple metadatabases can be created under one metadata tenant.

The metadatabase and the metadata tables are in a one-to-many mapping relationship (i.e., 1:0... *). On this basis, multiple metadata tables can be created under one metadatabase.

Secondly, the embodiment of this application provides a mode of realizing metadata table query based on the metadata tenant. Through the mode above, the concept of the metadata tenant is designed for online data directory management, so that the metadata can be divided and the metadata tenant can be taken as the minimum granularity of multi-tenant isolation, so that metadata under different metadata tenants can be isolated from each other without affecting each other. Therefore, different metadata tenants can implement operations such as querying the metadata table when the metadata is isolated, so as to improve the flexibility and feasibility of the solution.

Based on the foregoing embodiment corresponding to FIG. 5, in all embodiments of the present disclosure, the method may preferably further include:
in a case that the cloud account information in the account authentication request is successfully verified, transmitting a service tenant set to the client, the service tenant set having a binding relation with the cloud account information; and
in response to a service selection request transmitted by the client, transmitting service processing information generated based on a target service tenant, the service selection request carrying a service tenant identifier indicating a target service tenant comprised in the service tenant set.

In one or more embodiments, a mode for metadata management in a multi-dimensional tenant system is introduced. As can be seen from the preceding embodiments, this application also defines a service tenant. The service tenant is an abstraction of a specific service scene and a tenant resource is isolated based on common service division. Through the design of the service tenant, different personalized specific service scenes can be generally adapted. By designing the service tenants, the strong association relationship between the metadata tenants and specific service scenes can be decoupled, so that the underlying metadata tenant is irrelevant to the specific service, while the service tenants are linked to the specific service scenes.

To facilitate understanding, FIG. 7 is another schematic diagram of a multi-tenant design model according to an embodiment of this application. As shown in the drawing, cloud account information (for example, the cloud account information applied by company A) is in one-to-many relationship with the service tenants (i.e., (i.e., 1:0... *), and multiple service tenants can be created under one piece of cloud account information. The one-to-many mapping relationship can greatly expand the boundary of single could account information to the service management. To facilitate the management and recognition of the service tenant, the user can customize a naming space (i.e., the name identifier) of the service tenant. One piece of cloud account information and a naming space can uniquely determine a service tenant. The service tenant and the data source are in a one-to-many mapping relationship (i.e., 1:0... *). On this basis, multiple data sources can be created under one service tenant. The data sources and a data source engine are in a many-to-one mapping relationship (i.e., 0...*:1).

The metadata processing apparatus verifies the cloud account information carried in the account authentication request. After the verification is successful, the service tenant set can be fed back to the client. Cloud account information is bound to a service tenant set, and the service tenant set includes at least one optional service tenant. The service tenant set can be presented on the client in a form of a list. To facilitate understanding, Table 4 is a diagram of the relationship between the cloud account information and the service tenant set.

**Table 4**

| Could account information | Service tenant set |
|---|---|
| COM123 | Service tenant_01 |
| | Service tenant_02 |
| | Service tenant_03 |
| COM888 | Service tenant_09 |
| | Service tenant_10 |

It should be noted that, the correspondence shown in table 4 is merely an example, and should not be understood as the limitation to this application.

The user selects a service tenant from the service tenant set and triggers a service selection request for this service tenant. The service selection request carries the identifier of the target service tenant, and the target service tenant belongs to the service tenant set. Hence, according to a service selection request, service processing information generated based on a target service tenant is fed back to the client, and the client may display the service processing information. One service tenant is associated with one metadata tenant set; the metadata tenant set includes at least one metadata tenant. As can be understood that the service tenants and metadata tenants can be in a one-to-one mapping relationship, a one-to-many mapping relationship, a many-to-one mapping relationship, or a many-to-many mapping relationship.

Combined with Table 4, it is assumed that the user selects "service tenant_01" from the service tenant set as the target service tenant. On this basis, Table 5 is a diagram of the relationship between the target service tenant and the target metadata tenant set.

**Table 5**

| Target service tenant | Target metadata tenant set |
|---|---|
| Service tenant_01 | Metadata tenant A |
| | Metadata tenant B |
| | Metadata tenant C |
| | Metadata tenant D |

It should be noted that, the correspondence shown in table 5 is merely an example, and should not be understood as the limitation to this application.

Secondly, the embodiment of this application provides a metadata management mode under the multi-tenant system. Through the mode above, in order to meet the unified management of the multi-tenant metadata in the public cloud scene, this application abstractly designs a multi-tenant domain model, i.e., the metadata tenant and service tenant. In this way, the pursuit of the unified metadata of different service scenes can be met, and the multi-tenant online data directory management function of public cloud can be provided.

Based on the embodiment corresponding to FIG. 5, in all embodiments of the present disclosure, the transmitting the service processing information generated based on the target service tenant to the client in response to the type selection request transmitted by the client may preferably include:
in response to a service selection request transmitted by the client, determining a target metadata tenant set, the target metadata tenant set having a mapping relation with the target service tenant;
obtaining a target metadata table set having a mapping relation with the target metadata tenant set;
obtaining service data according to the target metadata table set and processing the service data to obtain the service processing information; and
transmitting the service processing information to the client.

In one or more embodiments, a mode for service processing in different service scenes is introduced. From the above embodiment, it can be seen that the service tenants are associated with the metadata tenants through the tenant dimension mapping; the tenant dimension mapping can be expressed in the form of a mapping table. Based on this, the corresponding target metadata tenant set can be determined according to the identifier of the target service tenant carried by the service selection request. Hence, the target metadata table set that has a mapping relationship with the target metadata tenant set is obtained, and the relevant service data is obtained combined with the target metadata table set. In this way, the service data is accordingly processed according to the target service type, to obtain service processing information, so as to transmit the service processing information to the client.

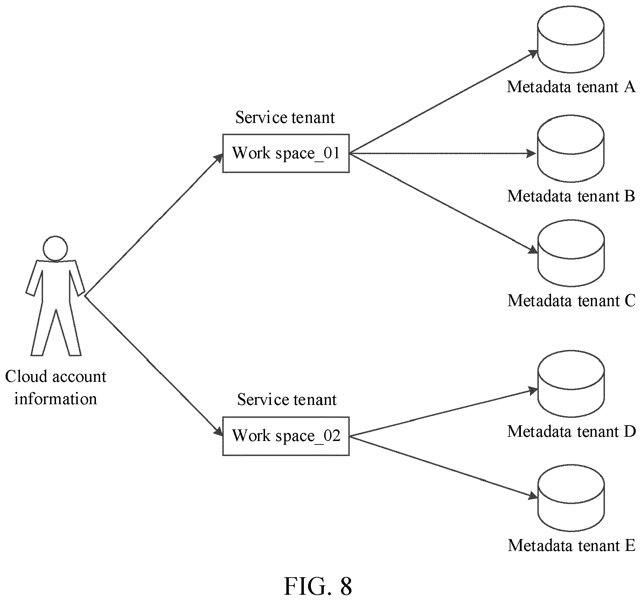

Exemplarily, FIG. 8 is a schematic diagram of metadata tenant association based on a service scene according to an embodiment of this application. As shown in the drawing, taking a data development platform as an example, a service tenant represents a work space, and a work space can correspond to one metadata tenant set (i.e., including at least one metadata tenant). Therefore, the service tenant and the metadata tenants are in one-to-many mapping relationship. For example, the metadata tenant set corresponding to work space_01 includes metadata tenant A, metadata tenant B, and metadata tenant C. Moreover, the metadata tenant set corresponding to work space_02 includes metadata tenant D and metadata tenant E.

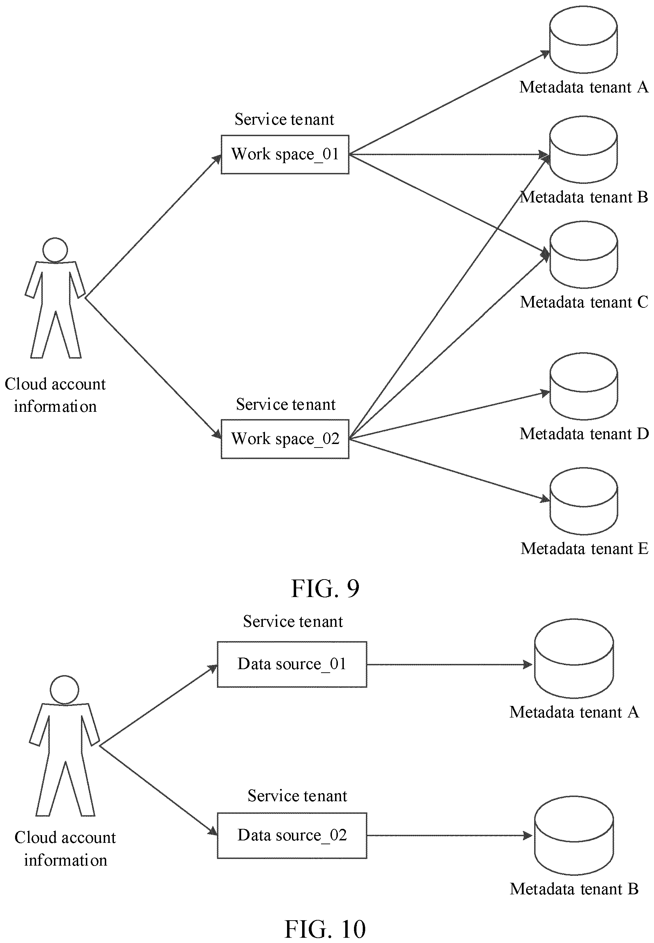

Exemplarily, FIG. 9 is another schematic diagram of metadata tenant association based on a service scene according to an embodiment of this application. As shown in the drawing, taking a data development platform as an example, the metadata tenants and the service tenants are in many-to-many mapping relationship. For example, the metadata tenant set corresponding to work space_01 includes metadata tenant A, metadata tenant B, and metadata tenant C. Moreover, the metadata tenant set corresponding to work space_02 includes metadata tenant B, metadata tenant C, metadata tenant D, and metadata tenant E.

Exemplarily, FIG. 10 is another schematic diagram of metadata tenant association based on a service scene according to an embodiment of this application. As shown in the drawing, taking a DLC or DLF service scene as an example, a service tenant represents a data source, and a data source corresponds to one metadata tenant. Therefore, the service tenant and the metadata tenant are in one-to-one mapping relationship. For example, data source_01 corresponds to metadata tenant A, and data source_02 corresponds to metadata tenant B.

Again, the embodiment of this application provides a mode of conducting service processing in different service scenes. In this way, the association between two tenant dimensions is realized based on the tenant dimension mapping. That is, the mapping relationship between the metadata tenants and service tenants is defined through the tenant dimension mapping; the mapping relationship is related to specific service logic pursuits. Mapping is carried out according to the specific service scene, so as to realize the general and multi-scene central metadata online data directory management system. The online data directory management system has the advantages of high scalability, high performance, and high fault tolerance, and supports the rapid adaptation and interconnection of multi-compute engines.

On the basis of the embodiment corresponding to FIG. 5, in all embodiments of the present disclosure, in a case that the cloud account information in the account authentication request is successfully verified, the cloud account information may be preferably stored in a target session, the target session being created based on the account authentication request; and in a case of receiving a Remote Procedure Call (RPC) request, obtaining the cloud account information from the target session.

On this basis, in another optional embodiment provided by an embodiment of this application, receiving the account authentication request transmitted by the client specifically may include:
receiving the account authentication request transmitted by the client through a target communication interface, the target communication interface being a communication interface originally supported by the client.

On the basis of any of the above embodiments, a mode for enhancing security authentication in the case of multi-compute engine compatibility is introduced. As can be known from the preceding embodiment, considering that some original online metadata management services (for example, Hive Metastore) are general and recognized online data directory management components, therefore, many big data components are all adapted and connected with the general data directory management component services (i.e., the Hive Metastore) to manage data directories. To reduce the cost of switching between existing components and clients and support rapid and efficient metadata system switching, this application designs a set of RPC interface services compatible with general data directory management component services (i.e., the Hive Metastore) to implement metadata switching and connection at a relatively low cost. In addition to providing RPC interface call for the big data computing and analysis engine, it also provides a data directory management operation for an HTTP interface support interface, meeting diversified usage requirements of an upper-layer service product.

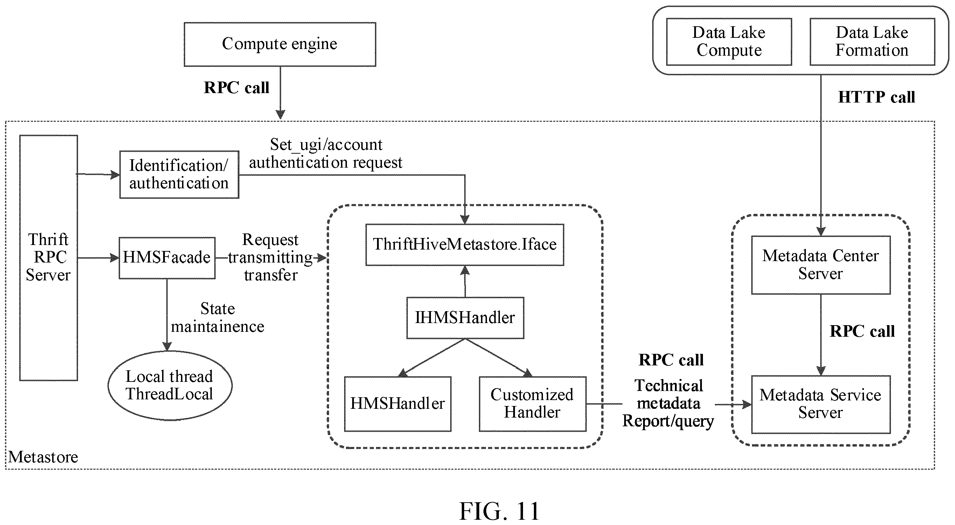

On the basis of any of the above embodiments, to facilitate understanding, FIG. 11 is a schematic diagram of multi-compute engine compatibility according to an embodiment of this application; as shown in the drawing, taking the original Hive Metastore as an example, an interface type IHMSHandler is defined in the original Hive Metastore. This type inherits the RPC interface defined ThriftHiveMetastore.Iface. The HMSHandler type implements all interfaces defined by IHMSHandler, and implements single-tenant metadata persistence based on Java Data Objects (JDO) framework, where a common metadata storage database includes, but not limited to, a database written in Java (Derby), relational database management system (MySQL), object-relational database management systems (PostgreSQL), etc. In order to ensure the compatibility of the RPC interface, this application creates and implements a customized Handler type. This type inherits the IHMSHandler interface and completely re-implements the metadata management logic. The customized Handler mainly implements authentication and data encapsulation processing for request parameters. The service layer of the underlying service of the metadata is called through the RPC interface inside the metadata to implement a persistence operation.

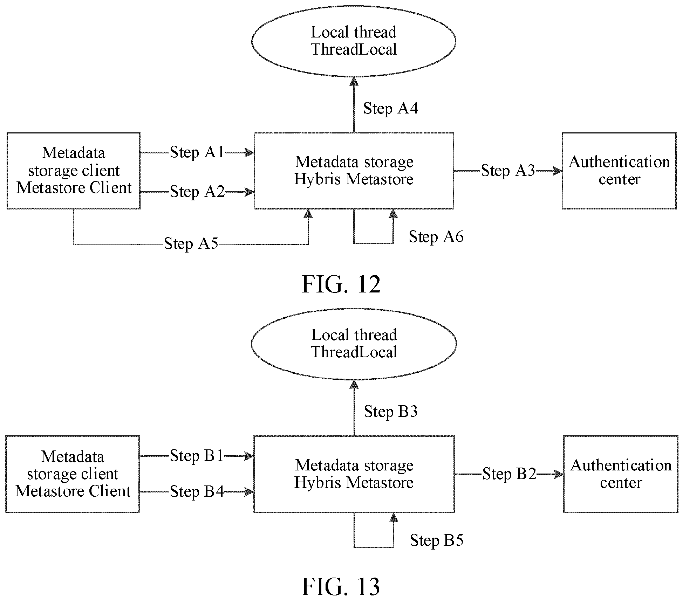

On the basis of any of the above embodiments, when the RPC interface is compatible, security authentication reinforcement can also be performed on the RPC interface. For ease of understanding, FIG. 12 is a schematic flowchart of information authentication according to an embodiment of this application. As shown in the drawing, an existing interface set_ugi can be reused to transfer the authentication information. The original set_ugi interface is used for setting user group information (UserGroupInformation, (UGI)), i.e., set_ugi (set UserGroupInformation), of the distributed system infrastructure (for example, Hadoop) used in the Hive type. In the public cloud scene, user group information using Hadoop cannot be stored based on COS. Therefore, this method needs to be rewritten an reused to receive cloud account information and perform authentication and verification.

In Step A1, the Metastore Client creates an RPC connection.

In Step A2, the Metastore Client transmits an account authentication request to Hybris Metastore through the target communication interface (i.e., the original set_ugi interface).

In Step A3, Hybris Metastore calls the RPC server to verify the account authentication request. For example, it can be implemented through the authentication center. If the cloud account information fails to pass the authentication, the RPC call is closed.

In Step A4, if the cloud account information passes the authentication, the cloud account information would be stored in a target session called this time. When the account authentication request passes, the target session can be created in the ThreadLocal.

In Step A5, the Metastore Client initiates other RPC requests to Hybris Metastore.

In Step A6, the cloud account information required for this RPC request is obtained from the target session of ThreadLocal.

Next, in the embodiment of this application, a mode of enhancing security authentication in a case of implementing multi-compute engine compatibility is provided. In this way, it creates and implements a customized Handler type. This Handler type inherits the IHMSHandler interface and re-implements the metadata management logic. The customized Handler type mainly implements authentication and data encapsulation processing for request parameters. Finally, the service layer of the underlying service of the metadata is called through the RPC interface inside the metadata to perform a persistence operation. In addition, existing interfaces can be directly reused to enhance security authentication of the RPC interfaces, thus improving data security.

On the basis of any of the above embodiments, in a case that the cloud account information can be obtained from the target session through an RPC request, in all embodiments of the present disclosure, receiving the account authentication request transmitted by the client specifically may preferably include:
receiving the account authentication request transmitted by the client, the account authentication request being generated after encapsulating the cloud account information by calling a first transmission method by the client; and
calling a second transmission method to decapsulate the account authentication request to obtain the cloud account information, the second transmission method adopting a same protocol type as the first transmission method.

In one or more embodiments, another mode for enhancing security authentication in the case of multi-compute engine compatibility is introduced. As can be seen from the embodiment above, in order to reduce the cost of switching between existing components and clients and support rapid and efficient metadata system switching, this application not only designs a set of RPC interface services compatible with original online metadata management services, but also provides data directory management operations of the HTTP interface support interface to meet the diversified usage requirements of upper-layer service products.

It should be noted that, the design of multi-compute engine compatibility can be seen in FIG. 11 and the corresponding description in FIG. 11, which is not repeated herein. When the RPC interface is compatible, security authentication reinforcement can also be performed on the RPC interface. On the basis of any of the above embodiments, to facilitate understanding, FIG. 13 is another schematic flowchart of information authentication according to an embodiment of this application. As shown in the drawing, the RPC server uses TSaslServerTranspor to customize an authentication call function (CallbackHandler) to obtain authentication information from the RPC client connection for verification.

In Step B1, the Metastore Client creates an RPC connection and transmits an account authentication request to Hybris Metastore.

In Step B2, Hybris Metastore calls the RPC server to verify the account authentication request. For example, it can be implemented through the authentication center. If the cloud account information fails to pass the authentication, the RPC call is closed.

In Step B3, if the cloud account information passes the authentication, the cloud account information would be stored in a target session called this time. When the account authentication request passes, the target session can be created in the ThreadLocal.

In Step B4, the Metastore Client initiates other RPC requests to Hybris Metastore.

In Step B5, the cloud account information required for this RPC request is obtained from the target session of ThreadLocal.

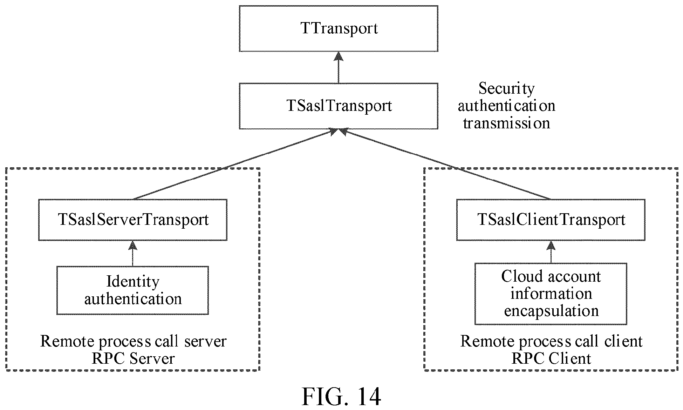

On the basis of any of the above embodiments, in the extended RPC authentication framework, corresponding modules are added to both the RPC server and the RPC client. FIG. 14 is a schematic diagram of information authentication implementing based on a security frame according to an embodiment of this application. As shown in the drawing, the RPC server calls the TSaslServerTransport method to authenticate the cloud account information, and the RPC client calls the TSaslClientTransport method to encapsulate the authentication information. Finally, the TSaslTransport and TTransport methods can be called for security authentication transmission.

Next, in the embodiment of this application, another mode of enhancing security authentication in a case of implementing multi-compute engine compatibility is provided. In this way, it creates and implements a customized Handler type. This Handler type inherits the IHMSHandler interface and re-implements the metadata management logic. The customized Handler type mainly implements authentication and data encapsulation processing for request parameters. Finally, the service layer of the underlying service of the metadata is called through the RPC interface inside the metadata to perform a persistence operation. In addition, authentication can be performed on each request, which facilitate the improving the authentication security.

Based on the foregoing embodiment corresponding to FIG. 5, in all embodiments of the present disclosure, the method may preferably further include:
in a case that the cloud account information in the account authentication request is successfully verified, receiving a metadata table creating request transmitted by the client, the metadata table creating request carrying a first object parameter, and the first object parameter comprising metadata category information;
performing parameter verification on the first object parameter carried in the metadata table creating request; and
in a case that the first object parameter passes verification, creating a metadata table according to the metadata category information.

In one or more embodiments, a mode for creating the metadata table is introduced. As can be known from the preceding embodiment, the online service provides the RPC interface method. On this basis, after the cloud account information in the account authentication request is successfully verified, the create_table method can be called to create the metadata table according to the metadata table creation request transmitted by the client. The metadata table creating request carries a first object parameter, and the first object parameter includes metadata category information. The metadata category information is used for indicating the data type, for example, the Hive type. After parameter verification is performed on the first object parameter, if the verification succeeds, the corresponding metadata table is created.

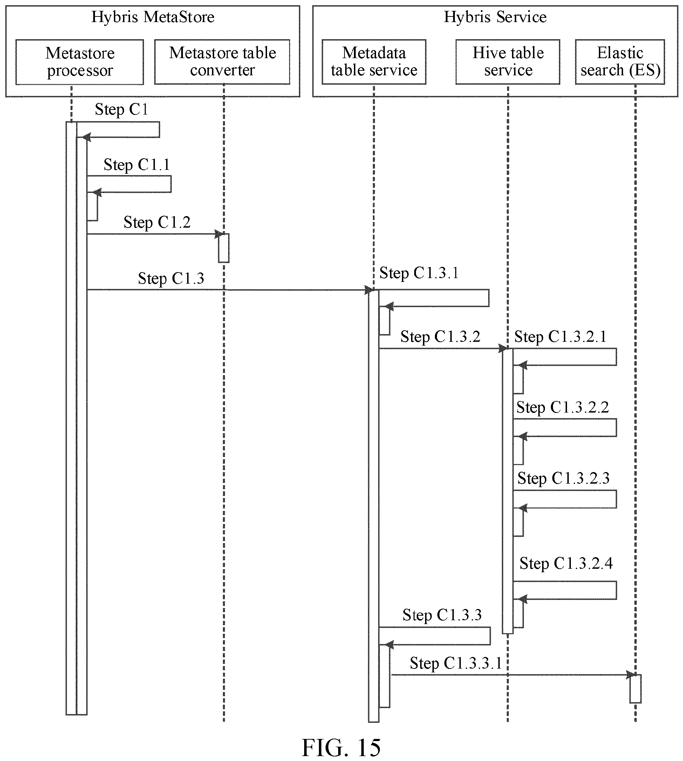

On the basis of any of the above embodiments, to facilitate understanding, the creation process of the metadata table would be introduced in combination with the drawing below. FIG. 15 is a schematic flowchart of metadata table creation in an embodiment of this application; as shown in the drawing, Hybris MetaStore includes HybrisMetastoreHandler and MetastoreTableConverter. The Hybris Service includes MetaTblService, HiveTblService, and elastic search (ES) indexes.

In Step C1, the HybrisMetastoreHandler calls the create_table method to create the metadata table.

In Step C1.1, user authentication is conducted, i.e., obtaining the cloud account information of the client and authenticating and verifying at the authentication center to determine whether the authentication of the user is passed, if the authentication is passed, continuing the execution, or disconnecting.

In Step C1.2, object encapsulation and service indirect interface call are carried out, i.e., obtaining the first object parameter of the RPC interface, performing object encapsulation on the first object parameter, and converting into the request parameter object required by the underlying service.

In Step C1.3, the interservice call requests the creation interface of the underlying service, and the underlying service is a basic component that encapsulates and manages the final persistence operation of the metadata.

In Step C1.3.1, a general pre-verification for table creation is conducted. For example, whether parameters are complete and whether tenant resource restrictions exist are determined. For example, for a database, the number of data tables that can be created in the database.

In Step C1.3.2, after the pre-verification is successful, according to the metadata type information specified by parameter input, if it is the Hive type metadata operation, the Hive metadata table management type HiveTblService is called for creation.

In Step C1.3.2.1, pre-verification is conducted, for example, determining whether the database thereof exists.

In Step C1.3.2.2, after the pre-verification is complete, the serialized object Storage Descriptor (SDS) of the metadata table is saved.

In Step C1.3.2.3, the table information is saved.

In Step C1.3.2.4, the column information associated with the table is saved, which includes partition and non-partition columns.

In Step C1.3.3, the general table is used for the creation of a post Hook execution method, and a corresponding operation is realized by an asynchronous event processing mechanism.

In Step C1.3.3.1, the metadata table information is synchronized to the ES index to facilitate global retrieval of metadata information.

Secondly, the embodiment of this application provides a mode of creating a metadata table. Through the mode above, the metadata table can be created based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the foregoing embodiment corresponding to FIG. 5, in all embodiments of the present disclosure, the method may preferably further include:
in a case that the cloud account information in the account authentication request is successfully verified, receiving a metadata table update request transmitted by the client, the metadata table update request carrying a second object parameter, and the second object parameter comprising metadata category information and table name information;
performing parameter verification on the second object parameter carried in the metadata table update request;
in a case that the second object parameter passes verification, obtaining a metadata table according to the table name information; and
deleting column information in the metadata table and updating the metadata table according to the metadata category information.

On the basis of any of the above embodiments, a mode for updating the metadata table is introduced. As can be known from the preceding embodiment, the online service provides the RPC interface method. On this basis, after the cloud account information in the account authentication request is successfully verified, the alter_table method can be called to update the metadata table according to the metadata table update request transmitted by the client. The metadata table update request carries a second object parameter, and the second object parameter includes metadata category information, table name information, etc. The metadata category information is used for indicating the data type, for example, the Hive type. After parameter verification is performed on the second object parameter, if verification is successful, the metadata table is obtained according to the table name information, and then the column information in the metadata table is deleted and the column is re-created according to the metadata category information to update the metadata table.

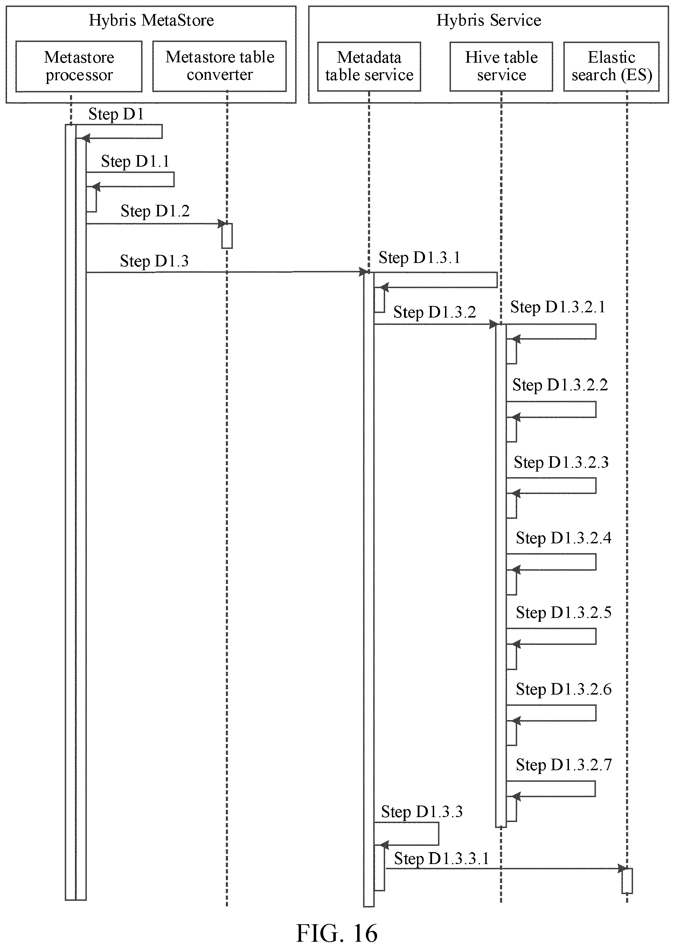

On the basis of any of the above embodiments, to facilitate understanding, the creation process of the metadata table would be introduced in combination with the drawing below. FIG. 16 is a schematic flowchart of metadata table update in an embodiment of this application; as shown in the drawing, Hybris MetaStore includes HybrisMetastoreHandler and MetastoreTableConverter. The Hybris Service includes MetaTblService, HiveTblService, and elastic search (ES) indexes.

In Step D1, the HybrisMetastoreHandler calls the alter_table method to update the metadata table.

In Step D1.1, user authentication is conducted, i.e., obtaining the cloud account information of the client and authenticating and verifying at the authentication center to determine whether the authentication of the user is passed, if the authentication is passed, continuing the execution, or disconnecting.

In Step D1.2, object encapsulation and service indirect interface call are carried out, i.e., obtaining the second object parameter of the RPC interface, performing object encapsulation on the second object parameter, and converting into the request parameter object required by the underlying service.

In Step D1.3, the interservice call requests the update interface of the underlying service, and the underlying service is a basic component that encapsulates and manages the final persistence operation of the metadata.

In Step D1.3.1, a general pre-verification for table creation is conducted. For example, whether parameters are complete and whether tenant resource restrictions exist are determined. For example, for a database, the number of data tables that can be created in the database.

In Step D1.3.2, after the pre-verification is successful, according to the metadata type information specified by parameter input, if it is the Hive type metadata operation, the Hive metadata table management type HiveTblService is called for executing the update operation.

In Step D1.3.2.1, pre-verification is conducted, for example, determining whether the database thereof exists and performing re-naming and verification on the table.

In Step D1.3.2.2, after the pre-verification is completed, old table original information of the to-be-updated table is obtained.

In Step D1.3.2.3, whether a table column cascading operation exists is determined.

In Step D1.3.2.4, the serialized object Storage Descriptor (SDS) of the metadata table is updated.

In Step D1.3.2.5, the table information is updated.

In Step D1.3.2.6, original full amount column information is deleted.

In Step D1.3.2.7, the column information associated with a full amount table (including partition and non-partition columns) is re-created.

In Step D1.3.3, the general table is used for the creation of a post Hook execution method, and a corresponding operation is realized by an asynchronous event processing mechanism.

In Step D1.3.3.1, the metadata table information is synchronized to the ES index to facilitate global retrieval of metadata information.

Secondly, the embodiment of this application provides a mode of updating a metadata table. Through the mode above, the metadata table can be changed based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the foregoing embodiment corresponding to FIG. 5, in all embodiments of the present disclosure, the method may preferably further include:
in a case that the cloud account information in the account authentication request is successfully verified, receiving a metadata table deleting request transmitted by the client, the metadata table deleting request carrying a third object parameter, and the third object parameter comprising metadata category information and table name information;
performing parameter verification on the third object parameter carried in the metadata table deleting request; and
in a case that the third object parameter passes verification, deleting a metadata table according to the table name information.

In one or more embodiments, a mode for deleting the metadata table is introduced. As can be known from the preceding embodiment, the online service provides the RPC interface method. On this basis, after the cloud account information in the account authentication request is successfully verified, the alter_table method can be called to delete the metadata table according to the metadata table deletion request transmitted by the client. The metadata table deletion request carries a third object parameter, and the third object parameter includes metadata category information, table name information, etc. The metadata category information is used for indicating the data type, for example, the Hive type. After parameter verification is performed on the third object parameter, if verification is successful, the metadata table is obtained according to the table name information, and then the column information in the metadata table is deleted to delete the metadata table.

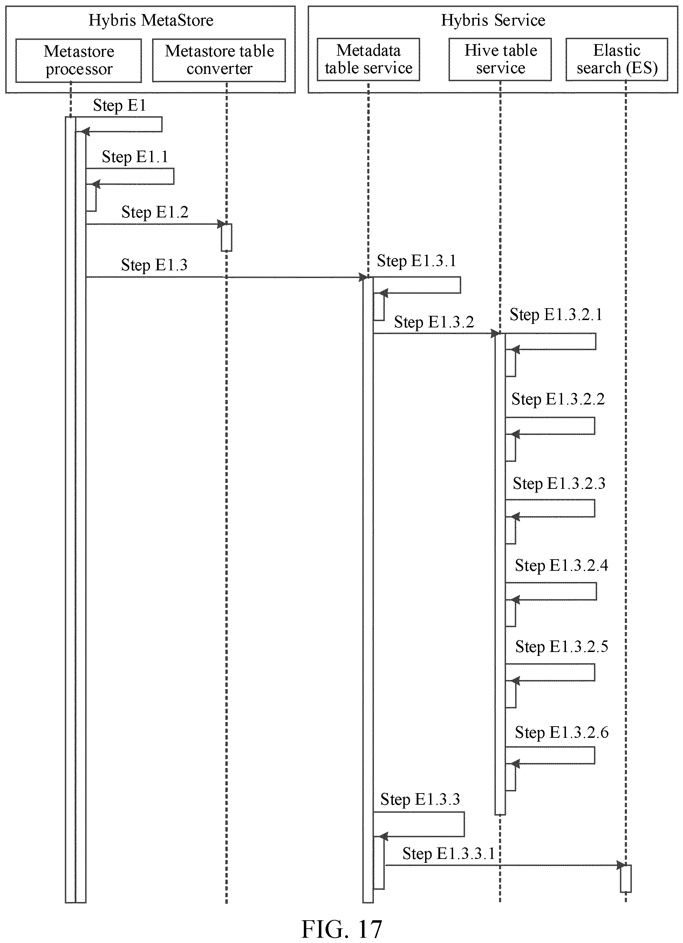

On the basis of any of the above embodiments, to facilitate understanding, the creation process of the metadata table would be introduced in combination with the drawing below. FIG. 17 is a schematic flowchart of metadata table deletion in an embodiment of this application; as shown in the drawing, Hybris MetaStore includes HybrisMetastoreHandler and MetastoreTableConverter. The Hybris Service includes MetaTblService, HiveTblService, and elastic search (ES) indexes.

In Step E1, the HybrisMetastoreHandler calls the delete_table method to delete the metadata table.

In Step E1.1, user authentication is conducted, i.e., obtaining the cloud account information of the client and authenticating and verifying at the authentication center to determine whether the authentication of the user is passed, if the authentication is passed, continuing the execution, or disconnecting.

In Step E1.2, object encapsulation and service indirect interface call are carried out, i.e., obtaining the third object parameter of the RPC interface, performing object encapsulation on the third object parameter, and converting into the request parameter object required by the underlying service.

In Step E1.3, the interservice call requests the deletion interface of the underlying service, and the underlying service is a basic component that encapsulates and manages the final persistence operation of the metadata.

In Step E1.3.1, a general pre-verification for table creation is conducted. For example, whether parameters are complete and whether tenant resource restrictions exist are determined. For example, for a database, the number of data tables that can be created in the database.

In Step E1.3.2, after the pre-verification is successful, according to the metadata type information specified by parameter input, if it is the Hive type metadata operation, the Hive metadata table management type HiveTblService is called for executing the deletion operation.

In Step E1.3.2.1, pre-verification is conducted, for example, determining whether the database thereof exists and performing re-naming and verification on the table.

In Step E1.3.2.2, after the pre-verification is completed, old table original information of the to-be-deleted table is obtained.

In Step E1.3.2.3, whether a table column cascading operation exists is determined.

In Step E1.3.2.4, the serialized object Storage Descriptor (SDS) of the metadata table is deleted.

In Step E1.3.2.5, the table information is deleted.

In Step E1.3.2.6, original full amount column information is deleted.

In Step E1.3.3, the general table is used for the creation of a post Hook execution method, and a corresponding operation is realized by an asynchronous event processing mechanism.

In Step E1.3.3.1, the metadata table information is synchronized to the ES index to facilitate global retrieval of metadata information.

Secondly, the embodiment of this application provides a mode of deleting a metadata table. Through the mode above, the metadata table can be deleted based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the embodiment corresponding to FIG. 5, in all embodiments of the present disclosure, the data table query request may preferably further carry a fourth object parameter, where the fourth object parameter includes query information.

In response to a data table query request transmitted by the client, transmitting a target metadata table to the client may specifically include:
performing parameter verification on the fourth object parameter carried in the data table query request; and
in a case that the fourth object parameter passes verification, transmitting the target metadata table to the client according to the query information.

On the basis of any of the above embodiments,, a mode for querying the metadata table is introduced. As can be known from the preceding embodiment, the online service provides the RPC interface method. On this basis, after the cloud account information in the account authentication request is successfully verified, the metadata table can be queried according to the data table query request transmitted by the client. The metadata table creation request carries a fourth object parameter, and the fourth object parameter includes metadata category information, table name information, etc. After the parameter verification is performed on the fourth object parameter, if verification is successful, the corresponding metadata table is queried.

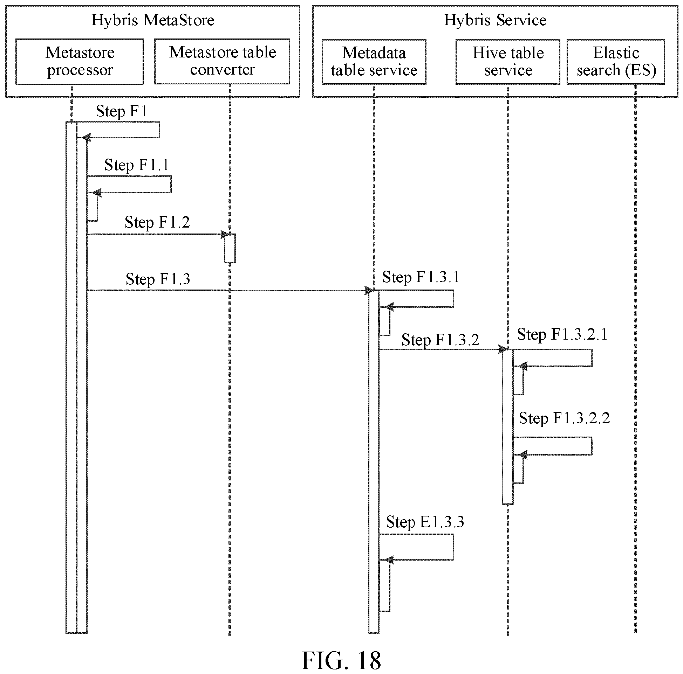

On the basis of any of the above embodiments, to facilitate understanding, the query process of the metadata table would be introduced in combination with the drawing below. FIG. 18 is a schematic flowchart of metadata table query in an embodiment of this application; as shown in the drawing, Hybris MetaStore includes HybrisMetastoreHandler and MetastoreTableConverter. The Hybris Service includes MetaTblService, HiveTblService, and elastic search (ES) indexes.

In Step F1, the HybrisMetastoreHandler calls the query_table method to query the metadata table.

In Step F1.1, user authentication is conducted, i.e., obtaining the cloud account information of the client and authenticating and verifying at the authentication center to determine whether the authentication of the user is passed, if the authentication is passed, continuing the execution, or disconnecting.

In Step F1.2, object encapsulation and service indirect interface call are carried out, i.e., obtaining the fourth object parameter of the RPC interface, performing object encapsulation on the fourth object parameter, and converting into the request parameter object required by the underlying service.

In Step F1.3, the interservice call requests the query interface of the underlying service, and the underlying service is a basic component that encapsulates and manages the final persistence operation of the metadata.

In Step F 1.3.1, a general pre-verification for table creation is conducted. For example, whether parameters are complete and whether tenant resource restrictions exist are determined. For example, for a database, the number of data tables that can be created in the database.

In Step F1.3.2, after the pre-verification is successful, according to the metadata type information specified by parameter input, if it is the Hive type metadata operation, the Hive metadata table management type HiveTblService is called for query.

In Step F1.3.2.1, pre-verification is conducted, for example, determining whether the database thereof exists and performing re-naming and verification on the table.

In Step F1.3.2.2, after the pre-verification is completed, queried table details are obtained.

In Step F1.3.3, the general table is used for the creation of a post Hook execution method, and a corresponding operation is realized by an asynchronous event processing mechanism.

Secondly, the embodiment of this application provides a mode of querying a metadata table. Through the mode above, the metadata table can be queried based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the foregoing embodiment corresponding to FIG. 5, in all embodiments of the present disclosure, the method may preferably further include:
in a case of receiving a first query request, determining a metadatabase corresponding to a metadatabase foreign key from a first metadata table according to the first query request, the first query request carrying a table identifier, and the table identifier being associated with the metadatabase foreign key;
in a case of receiving a second query request, determining a metadata table corresponding to a metadata table foreign key from a second metadata table according to the second query request, the second query request carrying a column, and the column being associated with the metadata table foreign key;
in a case of receiving a third query request, determining a metadata table corresponding to a metadata table foreign key from a third metadata table according to the third query request, the third query request carrying a subregion identifier, and the subregion identifier being associated with the metadata table foreign key;
in a case of receiving a fourth query request, determining a storage descriptor corresponding to a storage table foreign key from a fourth metadata table according to the fourth query request, the fourth query request carrying a subregion identifier, and the subregion identifier being associated with the storage table foreign key;
in a case of receiving a fifth query request, determining a storage descriptor corresponding to a storage table foreign key from a fifth metadata table according to the fifth query request, the fifth query request carrying a table identifier, and the table identifier being associated with the storage table foreign key; and
in a case of receiving a sixth query request, determining a metadatabase corresponding to a metadatabase foreign key from a sixth metadata table according to the sixth query request, the sixth query request carrying a function identifier, and the function identifier being associated with the metadatabase foreign key.

On the basis of any of the above embodiments, another general metadata data model is introduced. As can be seen from the embodiments above, the design of the original data model for the data module is relatively complicated, and an association operation among multiple tables is carried out, rendering slow metadata reading and writing. In addition, the original data model cannot support the multi-tenant design, either. Therefore, this application has transformed and simplified the original data model, which can only realize logical division of the metadata under multi-tenant. It can also improve the metadata read and write performances.

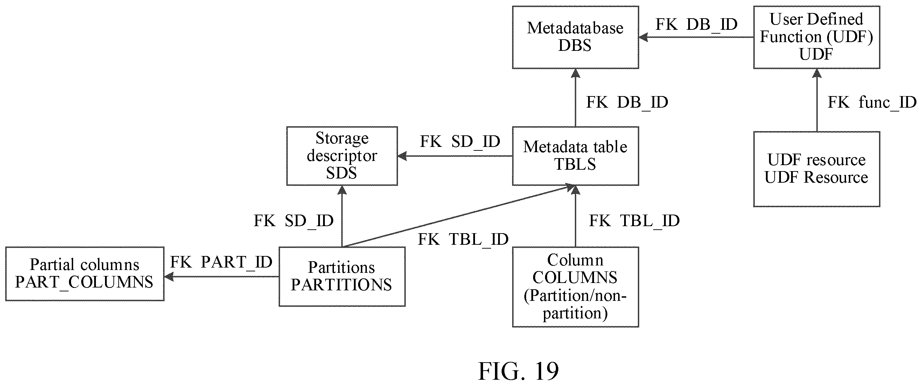

On the basis of any of the above embodiments, to facilitate understanding, FIG. 19 is a schematic diagram of a general metadata data model according to an embodiment of this application. As shown in the drawing, the metadata data model includes the metadatabase (DBS), metadata table (TBLS), COLUMNS, Storage Descriptor (SDS), PARTITIONS, partition column (PART_COLUMNS), User Defined Function (UDF), and UDF Resource. The models are explained below.

DBS is the definition of the database, for maintaining basic information of the general database (such as, base name and base description) and its metadata tenant.

TBLS is the definition of the data table, for maintaining basic information of the general data table (such as, table name and table description) and its metadata tenant.

COLUMNS include non-partition and partition column definitions for Hive-like tables, and are used for maintaining basic information of the columns (such as, column name and column type).

SDS is a description of serialized storage information of a Hive table for maintaining serialized information (such as serialized name and serialized Lib package).

PARTITIONS are Hive table partition information and are used for maintaining table partition details (for example, specific partition name, etc.).

PART_COLUMNS is the definition of the partition column of the Hive table. Each partition of the Hive-like table may independently maintain the corresponding column information. If it is not maintained, table partition column definitions are mainly used by default.

For example, the TBLS maintains the association between a table and a base using a metadata Foreign Key (FK) (i.e., DB_ID), and can be associated with a corresponding base record on the DBS through the record of the table. For example, when the first query request is received, based on the table identifier (i.e., TBL_ID) carried in the first query request and the association between TBL_ID and DB_ID, the metadatabase (DBS) corresponding to DB_ID can be found. Thus, the data query is realized.

For example, the COLUMNS maintain the association between a column and a table through a metadata table FK (i.e., TBL_ID), and can be associated with a corresponding table record on the TBLS through the record of the column. For example, when the second query request is received, based on the column carried in the second query request and the association between the column and TBL_ID, the metadata table (TBLS) corresponding to TBL_ID can be found. Thus, the data query is realized.

For example, the PARTITIONS maintain the association between a partition and a table through a metadata table FK (i.e., TBL_ID), and can be associated with a corresponding table record on the TBLS through the record of the partition. For example, when the third query request is received, based on the partition identifier (i.e., PART_ID) carried in the third query request and the association between PART_ID and TBL_ID, the metadata table (TBLS) corresponding to TBL_ID can be found. Thus, the data query is realized.

For example, the PARTITIONS maintain the association between a partition and a storage descriptor through a storage table FK (i.e., SD_ID), and can be associated with a corresponding record on the SDS through the record of the partition. For example, when the fourth query request is received, based on the partition identifier (i.e., PART_ID) carried in the fourth query request and the association between PART_ID and SD_ID, the storage descriptor (SDS) corresponding to SD_ID can be found. Thus, the data query is realized.

For example, the TBLS maintains the association between a table and a storage descriptor through a storage table FK (i.e., SD_ID), and can be associated with a corresponding base record on the SDS through the record of the table. For example, when the fifth query request is received, based on the table identifier (i.e., TBL_ID) carried in the fifth query request and the association between TBL_ID and SD_ID, the SDS corresponding to SD_ID can be found. Thus, the data query is realized.

For example, the UDF maintains the association between a function and a base through a metadatabase FK (i.e., DB_ID), and can be associated with a corresponding base record on the DBS through the function. For example, when the sixth query request is received, based on the function identifier (i.e., func_ID) carried in the sixth query request and the association between func_ID and DB_ID, the metadatabase (DBS) corresponding to DB_ID can be found. Thus, the data query is realized.

Secondly, the embodiment of this application provides a general metadata data model. For Hive type data, a more simplified general data model is designed to logically divide metadata resources while supporting multi-tenant metadata. The design and optimization of the underlying data model can improve the performance of metadata management, accelerate metadata read and write performances, remove multi-table dependency of the database, and implement the dependency relationship through logic. In addition, the distributed storage system can support the storage and management of massive metadata.

Based on the foregoing embodiment corresponding to FIG. 5, in all embodiments of the present disclosure, the method may preferably further include:
in a case of receiving a first query request, determining a metadatabase corresponding to a metadatabase foreign key from a first metadata table according to the first query request, the first query request carrying a table identifier, and the table identifier being associated with the metadatabase foreign key;
in a case of receiving a second query request, determining a metadata table corresponding to a metadata table foreign key from a second metadata table according to the second query request, the second query request carrying a column, and the column being associated with the metadata table foreign key

In one or more embodiments, another general metadata data model is introduced. As can be seen from the embodiments above, the design of the original data model for the data module is relatively complicated, and an association operation among multiple tables is carried out, rendering slow metadata reading and writing. In addition, the original data model cannot support the multi-tenant design, either. Therefore, this application has transformed and simplified the original data model, which can only realize logical division of the metadata under multi-tenant. It can also improve the metadata read and write performances.

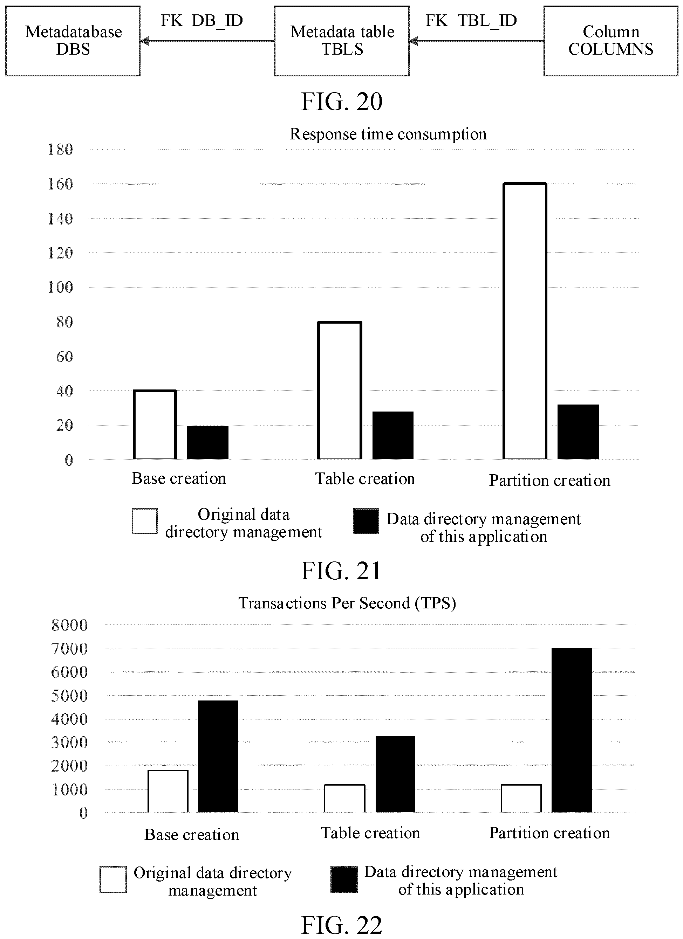

On the basis of any of the above embodiments, to facilitate understanding, FIG. 20 is another schematic diagram of a general metadata data model according to an embodiment of this application. As shown in the drawing, the metadata data model includes DBS, TBLS, and COLUMNS. These models are illustrated in the corresponding embodiments in FIG. 19, and details are not described herein again.

For example, the TBLS maintains the association between a table and a base through a metadatabase FK (i.e., DB_ID), and can be associated with a corresponding base record on the DBS through the record of the table. For example, when the first query request is received, based on the table identifier (i.e., TBL_ID) carried in the first query request and the association between TBL_ID and DB_ID, the metadatabase (DBS) corresponding to DB_ID can be found. Thus, the data query is realized.

For example, the COLUMNS maintain the association between a column and a table through a metadata table FK (i.e., TBL_ID), and can be associated with a corresponding table record on the TBLS through the record of the column. For example, when the second query request is received, based on the column carried in the second query request and the association between the column and TBL_ID, the metadata table (TBLS) corresponding to TBL_ID can be found. Thus, the data query is realized.

Secondly, the embodiment of this application provides another general metadata data model. For non-Hive type data, a more simplified general data model is designed. For example, metadata in a storage system database management system can adopt this data model and only focus on metadata for bases, tables, and columns. Logic division is performed on the metadata resources when metadata multi-tenant is supported. The design and optimization of the underlying data model can improve the performance of metadata management, accelerate metadata read and write performances, remove multi-table dependency of the database, and implement the dependency relationship through logic. In addition, the distributed storage system can support the storage and management of massive metadata.

Based on the introduction above, the performance of data directory management provided by this application will be evaluated below. Compared with the original data directory management (for example, Hive Metastore's data directory management), this application implements the general public cloud multi-tenant metadata online data directory management. It can provide services for different accounts on the cloud through a Software-as-a-Service (SaaS) metadata management service, and support extendable, highly scalable, and low-cost metadata management.

In addition, the unified metadata online directory management performance has been greatly improved For the convenience of explanation, FIG. 21 is a schematic diagram of comparison of response time consuming according to an embodiment of this application. As shown in the figure, compared with the original data directory management, the response time consumptions of aspects of base creation, table creation, and partition creation in the data directory management provided by this application has been significantly reduced. FIG. 22 is a schematic diagram of comparison of Transactions Per Second (TPS) according to an embodiment of this application. As shown in the figure, as compared with the original data directory management, the TPS in the data directory management provided by this application has also been significantly improved. For a create operation based on 10 million partitions (with 200 concurrent threads), the original data directory management has a TPS of 1200 for the partition operation and an average response time consumption of 160 milliseconds. The data directory management provided by this application has a TPS of 7000 for the partition operation and an average response time consumption of 28 milliseconds.

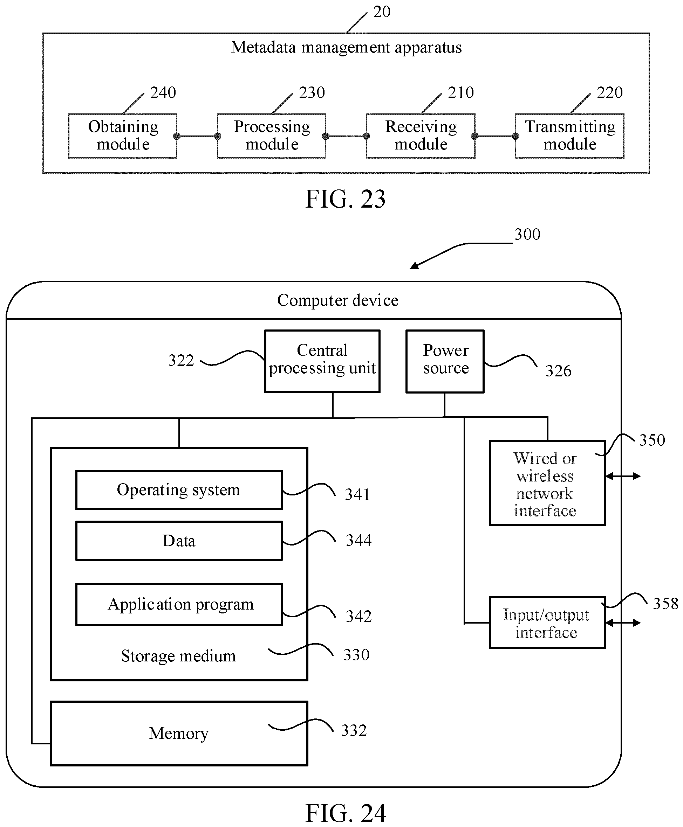

The following describes the metadata processing apparatus in this application in detail. FIG. 23 is a schematic diagram of an embodiment of the metadata processing apparatus according to the embodiment of this application. The metadata processing apparatus 20 includes:
a receiving module 210, configured to receive an account authentication request transmitted by a client, the account authentication request carrying cloud account information;
a transmitting module 220, configured to, in a case that the cloud account information in the account authentication request is successfully verified, transmit a metadata tenant set to the client, the metadata tenant set having a binding relation with the cloud account information;
the transmitting module 220, further configured to, in response to a tenant selection request transmitted by the client, transmit a metadatabase set to the client, the tenant selection request carrying a tenant identifier indicating a target metadata tenant of the metadata tenant set, and the metadatabase set having a mapping relation with the target metadata tenant; and
the transmitting module 220, further configured to, in response to a database query request transmitted by the client, transmit a metadata table set to the client, the database query request carrying a metadatabase identifier indicating a target metadatabase of the metadatabase set, and the metadatabase set having a mapping relation with the target metadatabase.

The embodiments of this application provide a metadata processing apparatus. Using the apparatus above, the concept of the metadata tenant is designed on an upper layer of the metadatabase, which takes the metadata tenant as a minimum granularity of isolation among tenants and supports a mode that one cloud account is bound to multiple metadata tenants. Therefore, when the number of multi-tenants supported by a cloud account needs to be expanded, the metadata tenants bound to the cloud account can be increased, so that the number of multi-tenants supported by the cloud account can be expanded, that is, it facilitates that the metadata management boundary of the cloud account can be expanded. The same metadata tenant has an independent metadata management space. For different metadata tenants, it can realize isolation of metadata resources (for example, a metadatabase and a metadata table), preventing metadata resources between tenants from being affected to achieve a better metadata management effect.

Based on the embodiment corresponding to FIG. 23, in another embodiment of the metadata processing apparatus 20 provided by the embodiments of the pretransmitted invention,
the transmitting module 220 is further configured to, after transmitting the metadata table set to the client in response to the database query request transmitted by the client, in response to a data table query request transmitted by the client, transmit a target metadata table to the client, the data table query request carrying a table identifier indicating the target metadata table comprised in the metadata table set.

The embodiments of this application provide a metadata processing apparatus. Through the apparatus above, the concept of the metadata tenant is designed for online data directory management, so that the metadata can be divided and the metadata tenant can be taken as the minimum granularity of multi-tenant isolation, so that metadata under different metadata tenants can be isolated from each other without affecting each other. Therefore, different metadata tenants can implement operations such as querying the metadata table when the metadata is isolated, so as to improve the flexibility and feasibility of the solution.

Based on the embodiment corresponding to FIG. 23, in another embodiment of the metadata processing apparatus 20 provided by the embodiments of the pretransmitted invention,
the transmitting module 220 is further configured to, in a case that the cloud account information in the account authentication request is successfully verified, transmit a service tenant set to the client, the service tenant set having a binding relation with the cloud account information; and
the transmitting module 220 is further configured to, in response to a service selection request transmitted by the client, transmit service processing information generated based on a target service tenant, the service selection request carrying an identifier of the target service tenant, and the target service tenant being included in the service tenant set.

The embodiments of this application provide a metadata processing apparatus. Through the apparatus above, in order to meet the unified management of the multi-tenant metadata in the public cloud scene, this application abstractly designs a multi-tenant domain model, i.e., the metadata tenant and service tenant. In this way, the pursuit of the unified metadata of different service scenes can be met, and the multi-tenant online data directory management function of public cloud can be provided.

Based on the embodiment corresponding to FIG. 23, in another embodiment of the metadata processing apparatus 20 provided by the embodiments of the pretransmitted invention,
the transmitting module 220 is further configured to, in response to a service selection request transmitted by the client, determine a target metadata tenant set, the target metadata tenant set having a mapping relation with the target service tenant;
obtain a target metadata table set having a mapping relation with the target metadata tenant set;
obtain service data according to the target metadata table set and processing the service data to obtain the service processing information; and
transmit the service processing information to the client.

The embodiments of this application provide a metadata processing apparatus. Through the apparatus above, the association between two tenant dimensions is realized based on the tenant dimension mapping. That is, the mapping relationship between the metadata tenants and service tenants is defined through the tenant dimension mapping; the mapping relationship is related to specific service logic pursuits. Mapping is carried out according to the specific service scene, so as to realize the general and multi-scene central metadata online data directory management system. The online data directory management system has the advantages of high scalability, high performance, and high fault tolerance, and supports the rapid adaptation and interconnection of multi-compute engines.

Based on the embodiment corresponding to FIG. 23, in another embodiment of the metadata processing apparatus 20 provided by the embodiments of the pretransmitted invention, the metadata processing apparatus 20 further includes a processing module 230 and an obtaining module 240.

The processing module 230 is configured to in a case that the cloud account information in the account authentication request is successfully verified, store the cloud account information in a target session, the target session being created based on the account authentication request; and
the obtaining module 240 is further configured to in a case of receiving a Remote Procedure Call (RPC) request, obtain the cloud account information from the target session.

On the basis of the embodiment corresponding to FIG. 23, in another embodiment of the metadata processing apparatus 20 provided by the embodiment of this application, the receiving module 210 is specifically used for receiving the account authentication request transmitted by the client through a target communication interface, the target communication interface being a communication interface originally supported by the client.

The embodiments of this application provide a metadata processing apparatus. Using the apparatus above, a customized Handler type is created and implemented. This Handler type inherits the IHMSHandler interface and re-implements the metadata management logic. The customized Handler mainly implements authentication and data encapsulation processing for request parameters. Finally, the service layer of the underlying service of the metadata is called through the RPC interface inside the metadata to implement a persistence operation. In addition, existing interfaces can be directly reused to enhance security authentication of the RPC interfaces, thus improving data security.

Based on the embodiment corresponding to FIG. 23, in another embodiment of the metadata processing apparatus 20 provided by the embodiments of the pretransmitted invention,
a receiving module 210 is specifically configured to receive the account authentication request transmitted by the client, the account authentication request being generated after encapsulating the cloud account information by calling a first transmission method by the client; and
call a second transmission method to decapsulate the account authentication request to obtain the cloud account information, the second transmission method adopting a same protocol type as the first transmission method.

The embodiments of this application provide a metadata processing apparatus. Using the apparatus above, a customized Handler type is created and implemented. This Handler type inherits the IHMSHandler interface and re-implements the metadata management logic. The customized Handler mainly implements authentication and data encapsulation processing for request parameters. Finally, the service layer of the underlying service of the metadata is called through the RPC interface inside the metadata to implement a persistence operation. In addition, authentication can be performed on each request, which facilitate the improving the authentication security.

Based on the embodiment corresponding to FIG. 23, in another embodiment of the metadata processing apparatus 20 provided by the embodiments of the pretransmitted invention,
the receiving module 210 is also configured to in a case that the cloud account information in the account authentication request is successfully verified, receive a metadata table creating request transmitted by the client, the metadata table creating request carrying a first object parameter, and the first object parameter including metadata category information;
the processing module 230 is further configured to perform parameter verification on the first object parameter carried in the metadata table creating request; and
the processing module 230 is further configured to in a case that the first object parameter passes verification, create a metadata table according to the metadata category information.

The embodiments of this application provide a metadata processing apparatus. Through the apparatus above, the metadata table can be created based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the embodiment corresponding to FIG. 23, in another embodiment of the metadata processing apparatus 20 provided by the embodiments of the pretransmitted invention,
the receiving module 210 is further configured to in a case that the cloud account information in the account authentication request is successfully verified, receive a metadata table update request transmitted by the client, the metadata table update request carrying a second object parameter, and the second object parameter including metadata category information and table name information;
the processing module 230 is further configured to perform parameter verification on the second object parameter carried in the metadata table update request; and
the obtaining module 240 is further configured to in a case that the second object parameter passes verification, obtain a metadata table according to the table name information; and
the processing module 230 is further configured to delete column information in the metadata table and update the metadata table according to the metadata category information.

The embodiments of this application provide a metadata processing apparatus. Through the apparatus above, the metadata table can be changed based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the embodiment corresponding to FIG. 23, in another embodiment of the metadata processing apparatus 20 provided by the embodiments of the pretransmitted invention,
the receiving module 210 is further configured to in a case that the cloud account information in the account authentication request is successfully verified, receive a metadata table deleting request transmitted by the client, the metadata table deleting request carrying a third object parameter, and the third object parameter including metadata category information and table name information;
the processing module 230 is further configured to perform parameter verification on the third object parameter carried in the metadata table deletion request; and
the processing module 230 is further configured to in a case that the third object parameter passes verification, delete a metadata table according to the table name information.

The embodiments of this application provide a metadata processing apparatus. Through the apparatus above, the metadata table can be deleted based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the embodiment corresponding to FIG. 23, in another embodiment of the metadata processing apparatus 20 provided by the embodiments of the pretransmitted invention, the data table query request further carries a fourth object parameter, where the fourth object parameter includes query information.

The transmitting module 220 is specifically configured to perform parameter verification on the fourth object parameter carried in the data table query request; and
in a case that the fourth object parameter passes verification, transmit the target metadata table to the client according to the query information.

The embodiments of this application provide a metadata processing apparatus. Through the apparatus above, the metadata table can be queried based on the RPC interface method provided by the online service. Therefore, in the case of compatibility with multi-compute engines, the RPC interface inside the metadata can be used for calling the underlying service of the metadata for the persistent operation, so as to improve the feasibility and operability of the solution.

Based on the embodiment corresponding to FIG. 23, in another embodiment of the metadata processing apparatus 20 provided by the embodiments of the pretransmitted invention,
a processing module 230 is further configured to in a case of receiving a first query request, determine a metadatabase corresponding to a metadatabase foreign key from a first metadata table according to the first query request, the first query request carrying a table identifier, and the table identifier being associated with the metadatabase foreign key;
the processing module 230 is further configured to in a case of receiving a second query request, determine a metadata table corresponding to a metadata table foreign key from a second metadata table according to the second query request, the second query request carrying a column, and the column being associated with the metadata table foreign key.

The processing module 230 is further configured to in a case of receiving a third query request, determine a metadata table corresponding to a metadata table foreign key from a third metadata table according to the third query request, the third query request carrying a subregion identifier, and the subregion identifier being associated with the metadata table foreign key.

The processing module 230 is further configured to in a case of receiving a fourth query request, determine a storage descriptor corresponding to a storage table foreign key from a fourth metadata table according to the fourth query request, the fourth query request carrying a subregion identifier, and the subregion identifier being associated with the storage table foreign key.

The processing module 230 is further configured to in a case of receiving a fifth query request, determine a storage descriptor corresponding to a storage table foreign key from a fifth metadata table according to the fifth query request, the fifth query request carrying a table identifier, and the table identifier being associated with the storage table foreign key.

The processing module 230 is further configured to in a case of receiving a sixth query request, determine a metadatabase corresponding to a metadatabase foreign key from a sixth metadata table according to the sixth query request, the sixth query request carrying a function identifier, and the function identifier being associated with the metadatabase foreign key.

The embodiments of this application provide a metadata processing apparatus. Using the apparatus above, for Hive type data, a more simplified general data model is designed to logically divide metadata resources while supporting multi-tenant metadata. The design and optimization of the underlying data model can improve the performance of metadata management, accelerate metadata read and write performances, remove multi-table dependency of the database, and implement the dependency relationship through logic. In addition, the distributed storage system can support the storage and management of massive metadata.

Based on the embodiment corresponding to FIG. 23, in another embodiment of the metadata processing apparatus 20 provided by the embodiments of the pretransmitted invention,
a processing module 230 is further configured to in a case of receiving a first query request, determine a metadatabase corresponding to a metadatabase foreign key from a first metadata table according to the first query request, the first query request carrying a table identifier, and the table identifier being associated with the metadatabase foreign key;
the processing module 230 is further configured to in a case of receiving a second query request, determine a metadata table corresponding to a metadata table foreign key from a second metadata table according to the second query request, the second query request carrying a column, and the column being associated with the metadata table foreign key.

The embodiments of this application provide a metadata processing apparatus. Using the apparatus above, for non-Hive type data, a more simplified general data model is designed. For example, metadata in a storage system database management system can adopt this data model and only focus on metadata for bases, tables, and columns. Logic division is performed on the metadata resources when metadata multi-tenant is supported. The design and optimization of the underlying data model can improve the performance of metadata management, accelerate metadata read and write performances, remove multi-table dependency of the database, and implement the dependency relationship through logic. In addition, the distributed storage system can support the storage and management of massive metadata.

FIG. 24 is a schematic structural diagram of a computer device according to an embodiment of this application. The computer device 300 may vary greatly due to different configurations or performances, and may include one or more central processing units (CPUs) 322 (for example, one or more processors), a memory 332, and one or more storage media 330 (for example, one or more mass storage devices) that store an application program 342 or data 344. The memory 332 and the storage medium 330 may be transient storage or persistent storage. The program stored in the storage medium 330 may include one or more modules (not shown), and each module may include a series of instruction operations for the computer device. Further, a central processor 322 may be configured to communicate with the storage medium 330, and perform, on the computer device 300, the series of instruction operations in the storage medium 330.

The computer device 300 may further include one or more power supplies 326, one or more wired or wireless network interfaces 350, one or more input/output interfaces 358, and/or one or more operating systems 341, such as, Windows ServerTM, Mac OS XTM, UnixTM, LinuxTM, FreeBSDTM.

The steps performed by the computer device in the foregoing embodiment may be based on the computer device structure shown in FIG. 24.

In the embodiment of this application, a computer-readable storage medium is further provided; the computer-readable storage medium stores computer programs, and when being run in a computer, the computer is enabled to perform the method described according to the foregoing embodiments.

An embodiment of this application further provides a computer program product including a program, enabling, when running on a computer, the computer to perform the method described according to the foregoing embodiments.

A person skilled in the art can clearly understand that for convenience and conciseness of description, for specific working processes of the foregoing systems, devices and units, reference may be made to the corresponding processes in the foregoing method embodiments, and details are not described herein again.

In the several embodiments provided in this application, it should be understood that the disclosed system, apparatus, and method may be implemented in other manners. For example, the apparatus embodiments described above are merely exemplary. For example, the division of the units is merely the division of logic functions, and may use other division manners during actual implementation. For example, a plurality of units or components may be combined, or may be integrated into another system, or some features may be omitted or not performed. In addition, the coupling, or direct coupling, or communication connection between the displayed or discussed components may be the indirect coupling or communication connection through some interfaces, apparatus, or units, and may be electrical, mechanical or of other forms.

The units described as separate components may or may not be physically separated, and the components displayed as units may or may not be physical units, and may be located in one place or may be distributed over a plurality of network units. Some or all of the units may be selected based on actual needs to achieve the objectives of the solutions of the embodiments of the disclosure.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes various media that can store program codes, such as a USB flash drive, a removable hard disk, a Read-Only Memory (ROM), a Random Access Memory (RAM), a magnetic disk, or an optical disc.

As stated above, the embodiments are merely used for describing the technical solutions of this application, but are not intended to limit same. Although this application is described in detail with reference to the foregoing embodiments, it should be understood by a person skilled in the art that, modifications may still be made to the technical solutions described in the foregoing embodiments, or equivalent replacements may be made to the part of the technical features; moreover, such modifications or replacements do not cause the essence of corresponding technical solutions to depart from the spirit and scope of the technical solutions of the embodiments of this application.

## Claims

1. A metadata processing method, executable by a server, and comprising:
receiving an account authentication request transmitted by a client, the account authentication request carrying cloud account information;
in a case that the cloud account information in the account authentication request is successfully verified, transmitting a metadata tenant set to the client, the metadata tenant set having a binding relation with the cloud account information;
in response to a tenant selection request transmitted by the client, transmitting a metadatabase set to the client, the tenant selection request carrying a tenant identifier indicating a target metadata tenant of the metadata tenant set, and the metadatabase set having a first mapping relation with the target metadata tenant; and
in response to a database query request transmitted by the client, transmitting a metadata table set to the client, the database query request carrying a metadatabase identifier indicating a target metadatabase of the metadatabase set, and the metadata table set having a second mapping relation with the target metadatabase.

2. The processing method according to claim 1, wherein after the in response to a database query request transmitted by the client, transmitting a metadata table set to the client, the method further comprises:
in response to a data table query request transmitted by the client, transmitting a target metadata table to the client, the data table query request carrying a table identifier indicating the target metadata table comprised in the metadata table set.

3. The processing method according to claim 1, further comprising:
in a case that the cloud account information in the account authentication request is successfully verified, transmitting a service tenant set to the client, the service tenant set having a binding relation with the cloud account information; and
in response to a service selection request transmitted by the client, transmitting service processing information generated based on a target service tenant, the service selection request carrying a service tenant identifier indicating a target service tenant comprised in the service tenant set.

4. The processing method according to claim 3, wherein the in response to a service selection request transmitted by the client, transmitting service processing information generated based on a target service tenant comprises:
in response to a service selection request transmitted by the client, determining a target metadata tenant set, the target metadata tenant set having a mapping relation with the target service tenant;
obtaining a target metadata table set having a mapping relation with the target metadata tenant set;
obtaining service data according to the target metadata table set and processing the service data to obtain the service processing information; and
transmitting the service processing information to the client.

5. The processing method according to claim 1,
further comprising:
in a case that the cloud account information in the account authentication request is successfully verified, storing the cloud account information in a target session, the target session being created based on the account authentication request; and
in a case of receiving a Remote Procedure Call (RPC) request, obtaining the cloud account information from the target session.

6. The processing method according to claim 5, wherein the receiving an account authentication request transmitted by a client comprises:
receiving the account authentication request transmitted by the client through a target communication interface, the target communication interface being a communication interface originally supported by the client.

7. The processing method according to claim 5, wherein the receiving an account authentication request transmitted by a client comprises:
receiving the account authentication request transmitted by the client, the account authentication request being generated after encapsulating the cloud account information by calling a first transmission method by the client; and
calling a second transmission method to decapsulate the account authentication request to obtain the cloud account information, the second transmission method adopting a same protocol type as the first transmission method.

8. The processing method according to any one of claims 1 to 7, further comprising:
in a case that the cloud account information in the account authentication request is successfully verified, receiving a metadata table creating request transmitted by the client, the metadata table creating request carrying a first object parameter, and the first object parameter comprising metadata category information;
performing parameter verification on the first object parameter carried in the metadata table creating request; and
in a case that the first object parameter passes verification, creating a metadata table according to the metadata category information.

9. The processing method according to any one of claims 1 to 7, further comprising:
in a case that the cloud account information in the account authentication request is successfully verified, receiving a metadata table update request transmitted by the client, the metadata table update request carrying a second object parameter, and the second object parameter comprising metadata category information and table name information;
performing parameter verification on the second object parameter carried in the metadata table update request;
in a case that the second object parameter passes verification, obtaining a metadata table according to the table name information; and
deleting column information in the metadata table and updating the metadata table according to the metadata category information.

10. The processing method according to any one of claims 1 to 7, further comprising:
in a case that the cloud account information in the account authentication request is successfully verified, receiving a metadata table deleting request transmitted by the client, the metadata table deleting request carrying a third object parameter, and the third object parameter comprising metadata category information and table name information;
performing parameter verification on the third object parameter carried in the metadata table deleting request; and
in a case that the third object parameter passes verification, deleting a metadata table according to the table name information.

11. The processing method according to claim 2, wherein the data table query request further carries a fourth object parameter, and the fourth object parameter comprises query information; and
the in response to a data table query request transmitted by the client, transmitting a target metadata table to the client comprises:
performing parameter verification on the fourth object parameter carried in the data table query request; and
in a case that the fourth object parameter passes verification, transmitting the target metadata table to the client according to the query information.

12. The processing method according to claim 1, further comprising:
in a case of receiving a first query request, determining a metadatabase corresponding to a metadatabase foreign key from a first metadata table according to the first query request, the first query request carrying a table identifier, and the table identifier being associated with the metadatabase foreign key;
in a case of receiving a second query request, determining a metadata table corresponding to a metadata table foreign key from a second metadata table according to the second query request, the second query request carrying a column, and the column being associated with the metadata table foreign key;
in a case of receiving a third query request, determining a metadata table corresponding to a metadata table foreign key from a third metadata table according to the third query request, the third query request carrying a subregion identifier, and the subregion identifier being associated with the metadata table foreign key;
in a case of receiving a fourth query request, determining a storage descriptor corresponding to a storage table foreign key from a fourth metadata table according to the fourth query request, the fourth query request carrying a subregion identifier, and the subregion identifier being associated with the storage table foreign key;
in a case of receiving a fifth query request, determining a storage descriptor corresponding to a storage table foreign key from a fifth metadata table according to the fifth query request, the fifth query request carrying a table identifier, and the table identifier being associated with the storage table foreign key; and
in a case of receiving a sixth query request, determining a metadatabase corresponding to a metadatabase foreign key from a sixth metadata table according to the sixth query request, the sixth query request carrying a function identifier, and the function identifier being associated with the metadatabase foreign key.

13. The processing method according to claim 1, further comprising:
in a case of receiving a first query request, determining a metadatabase corresponding to a metadatabase foreign key from a first metadata table according to the first query request, the first query request carrying a table identifier, and the table identifier being associated with the metadatabase foreign key;
in a case of receiving a second query request, determining a metadata table corresponding to a metadata table foreign key from a second metadata table according to the second query request, the second query request carrying a column, and the column being associated with the metadata table foreign key.

14. A metadata processing apparatus, deployed on a server and comprising:
a receiving module, configured to receive an account authentication request transmitted by a client, the account authentication request carrying cloud account information;
a transmitting module, configured to, in a case that the cloud account information in the account authentication request is successfully verified, transmit a metadata tenant set to the client, the metadata tenant set having a binding relation with the cloud account information;
the transmitting module, further configured to, in response to a tenant selection request transmitted by the client, transmit a metadatabase set to the client, the tenant selection request carrying a tenant identifier indicating a target metadata tenant of the metadata tenant set, and the metadatabase set having a first mapping relation with the target metadata tenant; and
the transmitting module, further configured to, in response to a database query request transmitted by the client, transmit a metadata table set to the client, the database query request carrying a metadatabase identifier indicating a target metadatabase of the metadatabase set, and the metadata table set having a second mapping relation with the target metadatabase.

15. A computer device, comprising: a memory, a processor, and a bus system;
the memory being configured to store a program;
the processor being configured to execute the program in the memory, and the processor being configured to perform the processing method according to any one of claims 1 to 13 according to an instruction in a program code; and
the bus system being configured to connect the memory and the processor, so that the memory is communicated with the processor.

16. A computer-readable storage medium, comprising an instruction, when running on a computer, enabling the computer to perform the processing method according to any one of claims 1 to 13.

17. A computer program product, comprising a computer program, when executed by a processor, implementing the processing method according to any one of claims 1 to 13.
